# EUROPEAN PATENT APPLICATION

(11) **EP 2 110 705 A1**
(43) Date of publication of application: **21.10.2009**
(21) Application number: 09250994.2
(22) Date of filing: 31.03.2009
(51) Int. Cl.: G02F 1/1345, G02F 1/167

(54) **Display device and manufacturing method of display device**

(30) Priority: 15.04.2008 JP 2008105993; 27.05.2008 JP 2008138334
(71) Applicant: Ricoh Company, Ltd., Tokyo 143-8555 (JP)
(72) Inventor: Kondo, Hiroshi, Yokohama-shi, Kanagawa (JP); Yashiro, Tohru, Yokosuka-shi, Kanagawa (JP); Nakamura, Yuki, Machida-shi Tokyo (JP); Shibuya, Takeshi, Tsukuba-shi Ibaraki (JP); Hirano, Shigenobu, Yokohama-shi, Kanagawa (JP); Abe, Yukiko, Yokoham-shi Kanagawa (JP)
(74) Representative: Mounteney, Simon James

(57) **Abstract**

A display device includes a first substrate on which a semiconductor circuit is formed. A second substrate is disposed over the first substrate to include a first electrode formed on a first surface to perform image displaying, and a second electrode exposed to a second surface and bonded to the first electrode via a contact hole. A third substrate is disposed over the second substrate to include a third electrode formed to perform image displaying in association with the first electrode of the second substrate. An image displaying layer is disposed between the second substrate and the third substrate to perform image displaying. An electrode on a surface of the first substrate on which the semiconductor circuit is formed is electrically connected to the second electrode exposed to the second surface of the second substrate.

## Description

### BACKGROUND OF THE INVENTION

### 1. Field of the Invention

This invention relates to a display device which can be manufactured with a low cost, and a manufacturing method of a display device which can manufacture a display device with a low cost.

### 2. Description of the Related Art

Conventionally, when producing a display element for use in a display device, a semiconductor fabrication process is used to form a semiconductor circuit for driving the display element, on a substrate, such as a glass substrate, and form an insulating layer on the semiconductor circuit, and further form the display element on the insulating layer. Namely, the semiconductor circuit for driving the display element and the display element are formed one by one by laminating such films on the glass substrate.

For this reason, as disclosed in Japanese Laid-Open Patent Application No. 2004-104134, it is necessary to form a thick interlayer insulation film after the semiconductor circuit is formed, and it is necessary to form a through hole for electrically connecting the semiconductor circuit and the display element, in the thus formed interlayer insulation film.

When forming an interlayer insulation film using an inorganic material, such as SiO₂ or Si₃N₄, sputtering or CVD (chemical vapor deposition) method is used as the film forming method. However, such vacuum processes require a number of processes. Also, when an organic semiconductor material is used as a semiconductor material, a plasma process must be used as the process of forming the interlayer insulation film. The use of the plasma process may damage the organic semiconductor material, and it is difficult to obtain sufficient characteristics.

Moreover, when forming a through hole, etching, such as RIE (reactive ion etching), must be performed. The use of the RIE may damage the organic semiconductor material, and it is difficult to obtain predetermined characteristics.

In order to eliminate the problem, Japanese Laid-Open Patent Application No. 2007-103484 discloses a method of forming an interlayer insulation film by a screen printing, in which a mixture of fine particles and an organic material is used as the interlayer insulation film.

However, when the wet-type film forming method is performed, the interlayer insulation film must be formed after a driver part including a semiconductor chip is formed, as disclosed in Japanese Laid-Open Patent Application No. 2007-103484. Specifically, when a wet-type spreading of an insulating material solved in an organic solvent is performed and a semiconductor material for forming the semiconductor chip is easily eroded by the organic solvent, the semiconductor material will be adversely influenced by the organic solvent. It is difficult to obtain sufficient characteristics of the semiconductor chip formed by the semiconductor material.

Furthermore, heating is usually needed to form an interlayer insulation film. When a semiconductor material for forming the semiconductor chip is vulnerable to heating, the semiconductor chip will be adversely influenced by heating. It is difficult to obtain sufficient characteristics of the semiconductor chip.

Furthermore, formation of the interlayer insulation film or the through hole is performed after the driver part including the semiconductor chip is formed. For this reason, it takes much time to perform a manufacturing process including a series of processes, and the productivity will be reduced.

Furthermore, a display part is usually formed after the driver part including the semiconductor chip is formed. When the process of forming the display part includes a step of heating or UV irradiation and the semiconductor material which is easily damaged by heating or UV irradiation must be used, it is difficult to obtain sufficient characteristics of the semiconductor chip formed by the semiconductor material.

Furthermore, a pattern of electrodes is formed on the interlayer insulation film after the interlayer insulation film is formed. The interlayer insulation film which is adversely influenced by the supporting semiconductor layer may have surface irregularities. If the electrodes are formed on the surface irregularities of the interlayer insulation film, occurrence of a disconnection or formation of a high resistance region may take place, which causes a defective semiconductor chip to be produced. A conceivable method for eliminating surface irregularities is a CMP (chemical mechanical polishing) method. However, even if the CMP method is performed to make the surface of the interlayer insulation film flat, there is a possibility that the semiconductor layer be damaged by the CMP method. In addition, the number of processes will be increased and the manufacturing time will be increased by the use of the CMP method.

In the case of the method disclosed in Japanese Laid-Open Patent Application No. 2007-103484, the semiconductor material may be adversely influenced by the organic solvent used to mix the organic material with the fine particles, which will affect the characteristics of the semiconductor chip.

### SUMMARY OF THE INVENTION

In one aspect of the invention, the present disclosure provides an improved display device in which the above-described problems are eliminated.

In one aspect of the invention, the present disclosure provides a display device which is able to be manufactured with good quality and low cost, without adversely affecting the semiconductor material and the semiconductor chip, and raise the productivity.

In an embodiment of the invention which solves or reduces one or more of the above-mentioned problems, the present disclosure provides a display device comprising: a first substrate on which a semiconductor circuit is formed; a second substrate disposed over the first substrate to include a first electrode formed on a first surface of the second substrate to perform image displaying, and a second electrode exposed to a second surface of the second substrate and bonded to the first electrode via a contact hole; a third substrate disposed over the second substrate to include a third electrode formed to perform image displaying in association with the first electrode of the second substrate; and an image displaying layer formed between the second substrate and the third substrate to perform image displaying, wherein an electrode on a surface of the first substrate on which the semiconductor circuit is formed is electrically connected to the second electrode exposed to the second surface of the second substrate.

In an embodiment of the invention which solves or reduces one or more of the above-mentioned problems, the present disclosure provides a display device comprising: a first substrate on which a semiconductor circuit is formed; a second substrate disposed over the first substrate to include a first electrode formed on a first surface of the second substrate to perform image displaying, a second electrode exposed to a second surface of the second substrate and bonded to the first electrode via a contact hole, and a connection electrode being flush with the second electrode in a different position on the second surface and formed to be connected to an electrode on the first substrate; and an image displaying layer disposed on the first electrode of the second substrate to perform image displaying with the first electrode and an opposing electrode disposed on the image displaying layer, wherein electrodes on a surface of the first substrate on which the semiconductor circuit is formed are electrically connected to the second electrode and the connection electrode on the second surface of the second substrate respectively.

Other objects, features and advantages of the present invention will become more apparent from the following detailed description when read in conjunction with the accompanying drawings.

### BRIEF DESCRIPTION OF THE DRAWINGS

FIG. 1 is a diagram showing the composition of a drive circuit of a display device of a first embodiment of the invention.
FIG. 2A, FIG. 2B, FIG. 2C, and FIG. 2D are diagrams for explaining a manufacturing process of the display device of the first embodiment.
FIG. 3A, FIG. 3B, FIG. 3C, FIG. 3D, and FIG. 3E are diagrams for explaining a manufacturing process of the display device of the first embodiment.
FIG. 4A, FIG. 4B, and FIG. 4C are diagrams for explaining a manufacturing process of the display device of the first embodiment.
FIG. 5A, FIG. 5B, FIG. 5C, and FIG. 5D are diagrams for explaining a manufacturing process of the display device of the first embodiment.
FIG. 6 is a cross-sectional view of a modification of the display device of the first embodiment.
FIG. 7 is a diagram showing the composition of a drive circuit of a display device of a second embodiment of the invention.
FIG. 8A, FIG. 8B, FIG. 8C, and FIG. 8D are diagrams for explaining a manufacturing process of the display device of the second embodiment.
FIG. 9A, FIG. 9B, FIG. 9C, FIG. 9D, and FIG. 9E are diagrams for explaining a manufacturing process of the display device of the second embodiment.
FIG. 10A, FIG. 10B, and FIG. 10C are diagrams for explaining a manufacturing process of the display device of the second embodiment.
FIG. 11 is a top view showing the wiring structure of a pixel in the display device of the second embodiment.
FIG. 12A and FIG. 12B are a top view and a cross-sectional view showing the composition of a drive circuit of a display device of the second embodiment for explaining a manufacturing process of the display device.
FIG. 13A and FIG. 13B are a top view and a cross-sectional view showing the composition of a drive circuit of a display device of the second embodiment for explaining a manufacturing process of the display device.
FIG. 14A, FIG. 14B, FIG. 14C, and FIG. 14D are diagrams for explaining a manufacturing process of the display device of the second embodiment.
FIG. 15 is a cross-sectional view of a modification of the display device of the second embodiment.
FIG. 16A, FIG. 16B, FIG. 16C, FIG. 16D, and FIG. 16E are diagrams showing the composition of a semiconductor chip in a third embodiment of the invention.
FIG. 17A, FIG. 17B, FIG. 17C, and FIG. 17D are diagrams for explaining a manufacturing process of a display device of a fourth embodiment of the invention.
FIG. 18A, FIG. 18B, and FIG. 18C are diagrams for explaining a manufacturing process of a display device of a fifth embodiment of the invention.
FIG. 19A, FIG. 19B, and FIG. 19C are diagrams for explaining a manufacturing process of a display device of a sixth embodiment of the invention.
FIG. 20 is a top view showing the wiring structure of a pixel in a display device of a seventh embodiment of the invention.
FIG. 21A and FIG. 21B are cross-sectional views showing the wiring structure of a pixel in the display device of the seventh embodiment.

### DETAILED DESCRIPTION OF THE PREFERRED EMBODIMENTS

A description will be given of embodiments of the invention with reference to the accompanying drawings.

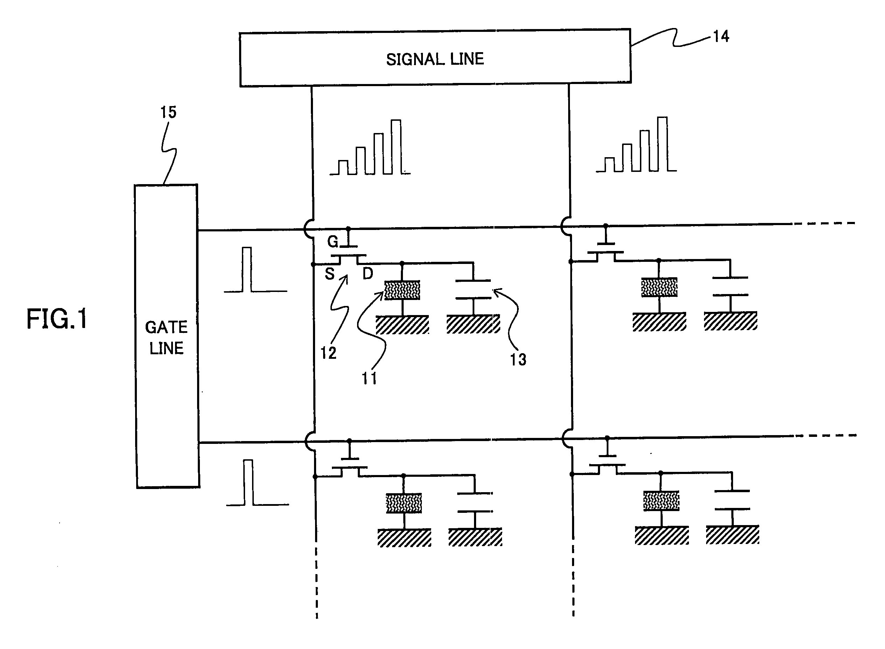

A first embodiment of the invention will be described. This embodiment relates to a method of manufacturing an electrophoretic display device. FIG. 1 shows the composition of a drive circuit of the electrophoretic display device of this embodiment.

Specifically, as shown in FIG. 1, a FET (field effect transistor) 12 and a pixel capacitor 13 are arranged for every pixel of the display device to drive an image displaying element 11 which is an electrophoretic display element used as one pixel.

In the FET 12, the gate (G) is connected to a gate line 15, the source (S) is connected to a signal line 14, and the drain (D) is connected to both one electrode of the image displaying element 11 and one electrode of the pixel capacitor 13. Both the other electrode of the image displaying element 11 and the other electrode of the pixel capacitor 13 are grounded.

In the drive circuit, the voltage supplied from the signal line 14 according to the gray scale of each pixel, and the gate voltage from the gate line 15 used as the scanning line for supplying the signal voltage to the gate (G) of each FET 12 are sequentially supplied to and scanned over the respective pixels, so that the displaying of the respective pixels is carried out.

The pixel capacitor 13 has the function to maintain the gray scale signal during a period of one scan, and the capacitance of the pixel capacitor 13 varies depending on the interval between two of the scans.

Next, the manufacturing process of the display device of this embodiment will be described.

The drive circuit of the display device of this embodiment includes three substrates 21, 31, and 41 in which respective electrodes are formed thereon. For the sake of convenience, a description of the region in which the pixel capacitor is formed will be omitted.

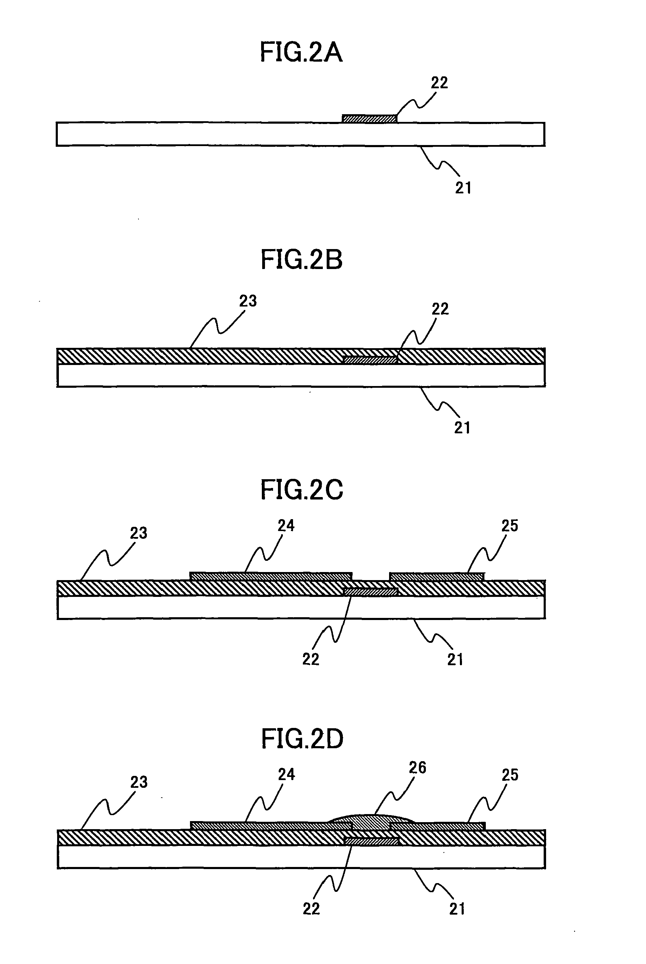

First, as shown in FIG. 2A, an electrode used as a gate electrode 22 is formed on the surface of the first substrate 21. A desired material of the first substrate 21 which can be used for this embodiment is an inorganic insulating material, such as SiO₂, or an organic insulating material, such as polyimide resin, styrene resin, polyethylene base resin, polypropylene, vinyl chloride base resin, polyester alkyd resin, polyamide, polyurethane, polycarbonate, polyarylate, polysulfone, diallyl phthalate resin, polyvinyl butyral resin, polyether resin, polyester resin, acrylic resin, silicone resin, epoxy resin, phenol resin, urea resin, melamine resin, fluorine base resin (PFA, PTFE, PVDF, etc.), parylene resin, epoxy acrylate, a photo-curing resin (urethane-acrylate, etc.), polysaccharide or its dielectric, such as pullulan cellulose. The substrate 21 may be formed with a film of the above-mentioned material deposited on the surface of a film-like conductive material. It is preferred that the volume resistivity of the material of the substrate 21 of this embodiment is above 1 x 10¹³ Q-cm. It is more preferred that the volume resistivity of the material of the substrate 21 of this embodiment is above 1 x 10¹⁴ Ω-cm. A desired material of the substrate that can be used as the second substrate 31 or the third substrate 41 (which will be described later) is the same as the above-mentioned material of the first substrate 21.

A desired material which can be used for the gate electrode 22 is at least one chosen from the group including a metal, such as Cr (chromium), Ta (tantalum), Ti (titanium), Cu (copper), Al (aluminum), Mo (molybdenum), W (tungsten), Ni (nickel), Au (gold), Pd (palladium), Pt (platinum), Ag (silver), Sn (tin), any of their alloys, a transparent electrode material made of ITO, indium oxide or zinc oxide, a polyacethylene base conductive polymer material, a polyphenylene base conductive polymer material, such as polyparaphenylene or its dielectric, polyphenylene vinylene or its dielectric, a heterocyclic base conductive polymer material, such as polypyrole or its dielectric, polythiophene or its dielectric, polyfuran or its dielectric, and an ionic conductive polymer material, such as polyaniline or its dielectric.

One of the above-mentioned conductive polymers may be subjected to doping with a suitable dopant so as to obtain a higher conductivity. It is desirable to use a dopant having a low vapor pressure for the above-mentioned doping. A desired material of the dopant is any of polysulfone acid, polystyrene sulfonate, naphthalene sulfonic acid, alkyl naphthalene sulfonic acid, etc. A metal, an alloy, or a conductive polymer may be used together with the dopant in this embodiment. A desired material of the gate electrode that can be used for the second substrate 31 and the third substrate 41 (which will be described later) is the same as the above-mentioned material for the first substrate 21.

The method of forming the gate electrode in this embodiment is a vacuum film deposition process, such as vacuum evaporation, sputtering, or CVD. After the film of the metallic material of the electrode is deposited in the whole surface, the application of a photoresist, the prebaking, the exposure by an exposure device, and the developing are performed so that a resist is formed in the region used as an electrode pattern. Then, the etching of the formed resist pattern, such as RIE (reactive ion etching), is performed so that the gate electrode is formed. Alternatively, the electrode forming method may be any of the ink jet method using an ink-like conductive material, the letterpress printing method, such as flexographic printing, the intaglio printing method, the screen printing method, the mimeographic printing method, the offset printing method, etc. In the case of forming the electrode by printing, the electrode can be formed quickly with a low cost. Furthermore, the electrode may be formed by metal plating. In the case of the metal plating, it is possible to form a thin electrode film with a low resistance using a simple processing unit. The metal plating is advantageous when it is intended to increase the electrode film thickness.

In this manner, the gate electrode 22 is formed on the first substrate 21 as shown in FIG. 2A.

Next, as shown in FIG. 2B, a gate insulating layer 23 is formed on the surface on which the gate electrode 22 is formed on the first substrate 21. A desired material of the gate insulating layer 23 of this embodiment is any of an inorganic insulating material, such as SiO₂ (silicon dioxide), Ta₂O₅ (tantalum pentoxide), and Al₂O₃ (alumina), and an organic insulating material, such as polyimide resin, styrene resin, polyethylene base resin, polypropylene, vinyl chloride base resin, polyester alkyd resin, polyamide, polyurethane, polycarbonate, polyarylate, polysulfone, diallyl phthalate resin, polyvinyl butyral resin, polyether resin, polyester resin, acrylic resin, silicone resin, epoxy resin, phenol resin, urea resin, polysaccharide (melamine resin), fluorine base resin (PFA, PTFE, PVDF, etc.), parylene resin, epoxy acrylate, a photo-curing resin (urethane-acrylate, etc.), polysaccharide or its dielectric, such as pullulan cellulose. It is preferred that the volume resistivity of the gate insulating layer of this embodiment is above 1 x 10¹³ Ω-cm. It is more preferred that the volume resistivity of the gate insulating layer of this embodiment is above 1 x 10¹⁴ Ω-cm.

The method of forming the gate insulating layer 23 in this embodiment is any of the vacuum deposition method, such as vacuum evaporation, sputtering, or CVD, the letterpress printing method, such as flexographic printing, the intaglio printing method, the screen printing method, the mimeographic printing method, the offset printing method, the anode oxidation method, the spin coat method, the dipping method, the spray coat method, the ink jet method, etc.

In this manner, the gate insulating layer 23 is formed to cover the gate electrode 22 formed on the first substrate 21 as shown in FIG. 2B.

Next, as shown in FIG. 2C, electrodes 24 and 25 are formed on the gate insulating layer 23. These electrodes 24 and 25 are the electrodes used as the drain (D) and the source (S) of the FET after the semiconductor layer is formed on the electrodes in the next step. Specifically, a film of an electrode material, such as Cu, is formed on the whole surface of the gate insulating layer 23 by sputtering, a photoresist is applied to the film of the electrode material, and the exposure using the exposure device and the development are performed so that a resist pattern is formed on the electrode parts where the drain and the source are to be formed. After this, the electrode material in the region where the resist pattern is not formed is removed by RIE. Finally, the resist pattern is removed using an organic solvent so that the electrodes 24 and 25 are formed on the gate insulating layer 23. Because these electrodes 24 and 25 are the electrodes for forming the drain and the source of the FET, a channel should be formed in the region located above the gate electrode 22 via the gate insulating layer 23. For this reason, the electrode 24 and the electrode 25 are separated from each other in this channel region.

Next, as shown in FIG. 2D, a semiconductor layer 26 is formed in the region located above the gate electrode 22 through the gate insulating layer 23, so that the semiconductor layer 26 contacts both the electrodes 24 and 25. A desired material of the semiconductor layer 26 in this embodiment is any of an organic semiconductor material chosen from the group including fluorene, polyfluorene derivative, polyfluorenone, fluorenone dielectric, poly-N-vinylcarbazole dielectric, poly-γ-carbazolylethylglutamate dielectric, polyvinyl phenanthrene dielectric, polysilane dielectric, oxazole dielectric, oxadiazole dielectric, allylamine dielectrics, imidazole derivative, allylamine derivative (mono-allylamine, tri-allylamine derivative), benzidine dielectric, diallylmethane dielectric, tri-allylmethane dielectric, styrylanthracene derivative, pyrazoline dielectric, divinylbenzene dielectric, hydrazone derivative, indene dielectric, indenone dielectric, butadiene dielectric, pyrene formaldehyde, pyrene dielectric (polyvinyl pyrene), stilbene derivative (alpha-phenyl stilbene derivative, bis-stilbene derivative), enamine dielectric, and thiophene dielectric (polyalkyl-thiophene dielectric, benzothieno-benzothiophene dielectric), an organic semiconductor material chosen from the group including pentacene, tetracene, bis-azo or tris-azo base coloring matter, poly-azo base coloring matter, triallylmethane base coloring matter, thiadin base coloring matter, oxadin base coloring matter, xanthene base coloring matter, cyanine base coloring matter, styllyl base coloring matter, pyrylium base coloring matter, quinacridone base coloring matter, indigo base coloring matter, perylene base coloring matter, multi-ring quinone base coloring matter, bis-benz-imidazole base coloring matter, indanslone base coloring matter, squarylium base coloring matter, anthraquinone base coloring matter, porphyrin base coloring matter, and phthalocyanine base coloring matter (copper phthalocyanine, thitanile phthalocyanine), a compound semiconductor chosen from the group including CdS, ZnO, PbTe, PbSnTe, InGaZnO, GaP, GaAlAs, and GaN, and a silicon semiconductor material (polycrystalline silicon, amorphous silicone).

The method of forming the semiconductor layer 26 in this embodiment is the vacuum film deposition process, such as vacuum evaporation, sputtering, or CVD. After the film of the semiconductor material is deposited in the whole surface, the application of a photoresist, the prebaking, the exposure by an exposure device, and the developing are performed so that a resist is formed in the region used as a semiconductor layer. Then, the etching of the formed resist pattern, such as RIE (reactive ion etching), is performed so that the semiconductor layer is formed. Alternatively, the semiconductor layer forming method may be any of the ink jet method using an ink-like conductive material, the letterpress printing method, such as flexographic printing, the intaglio printing method, the screen printing method, the mimeographic printing method, the offset printing method, etc. In the case of forming the semiconductor layer 26 by printing, the application of a photoresist and the exposure process using the exposure device may be omitted, and the semiconductor layer 26 can be formed with a low cost in a short time.

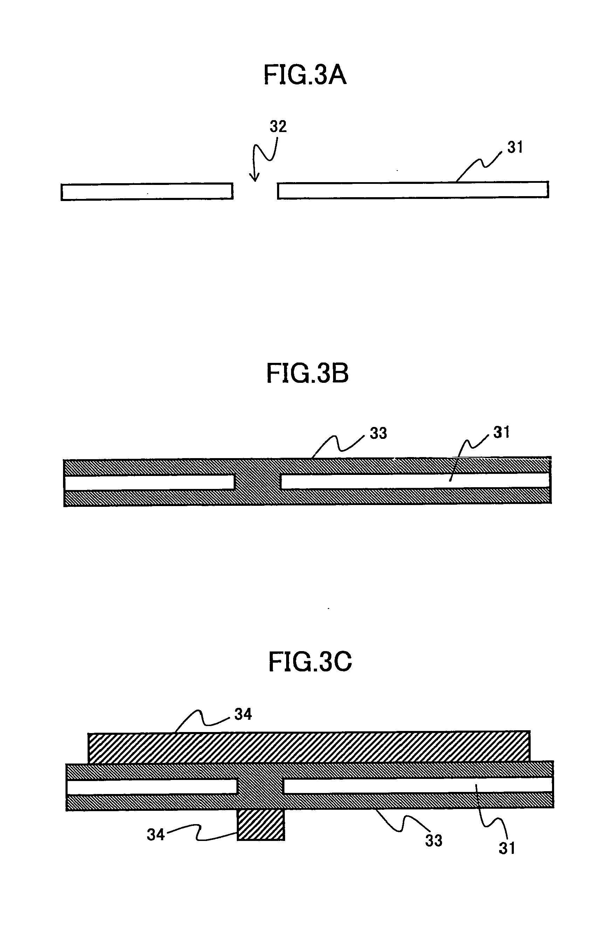

Next, through a manufacturing process that is separate from the above-mentioned manufacturing process, the portion of the display device of this embodiment which is used as an image displaying element is produced. A description will be given of this manufacturing process with reference to FIG. 3A - 4C.

As shown in FIG. 3A, a contact hole 32 is formed in the second substrate 31. The method of forming the contact hole 32 in this embodiment is any of the laser processing method, the etching method, and the molding method. Specifically, in the case of the etching method, a photo resist is applied in the whole surface other than the region where the contact hole 32 is to be formed, and the wet etching or the dry etching is performed so that the contact hole 32 is formed. In the case of the molding method, the substrate material is fused, and the molten material is poured into a mold, and the material is hardened by cooling. Next, as shown in FIG. 3B, the electroless deposition process of the second substrate 31 is performed. By this process, a metallic film 33 adheres to the exposed surfaces of the second substrate 31 (i.e., both the front and back surfaces of the second substrate 31 and the contact hole 32). In the case of the electroless deposition process, the metallic film 33 efficiently adheres to not only the surfaces of the second substrate 31 but also the contact hole 32, and the metallic film 33 can be formed homogeneously. The method of forming the metallic film 33 in this embodiment may be the vacuum film deposition process, such as vacuum evaporation, sputtering, or CVD, other than the above-mentioned electroless deposition process. In the case of the CVD process, the step coverage is good, and it is preferred to use the CVD process when forming an electrode in a contact hole.

Next, as shown in FIG. 3C, a photoresist 34 is applied to the whole surface of the second substrate 31 on which the metallic film 33 is formed, and the prebaking, the exposure by the exposure device, and the developing are performed. Thereby, the pattern of the photoresist 34 is formed only in the region in which the electrode is to be formed on the metallic film 33.

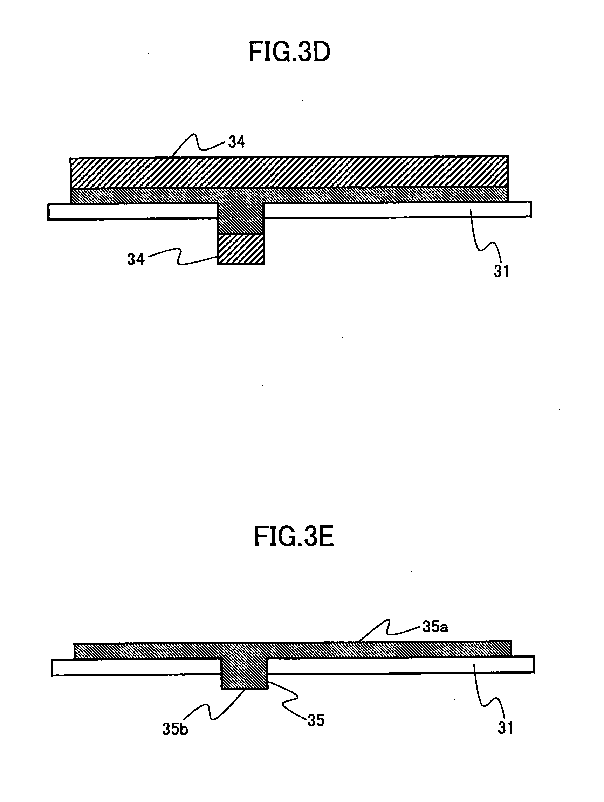

Next, as shown in FIG. 3D, the etching, such as RIE, is performed to remove the metallic film 33 in the region in which the photoresist 34 is not formed.

Next, as shown in FIG. 3E, the remaining photoresist 34 is removed with an organic solvent, so that an electrode 35 is formed on the second substrate 31. The electrode 35 formed at this time includes an electrode portion 35a on one surface which forms the electrode of the image displaying element, and an electrode portion 35b in the contact hole 32 on the other surface. The surface of the electrode portion 35b is formed to project downward from the surface of the second substrate 31, and the electrode portion 35b has a convex shape.

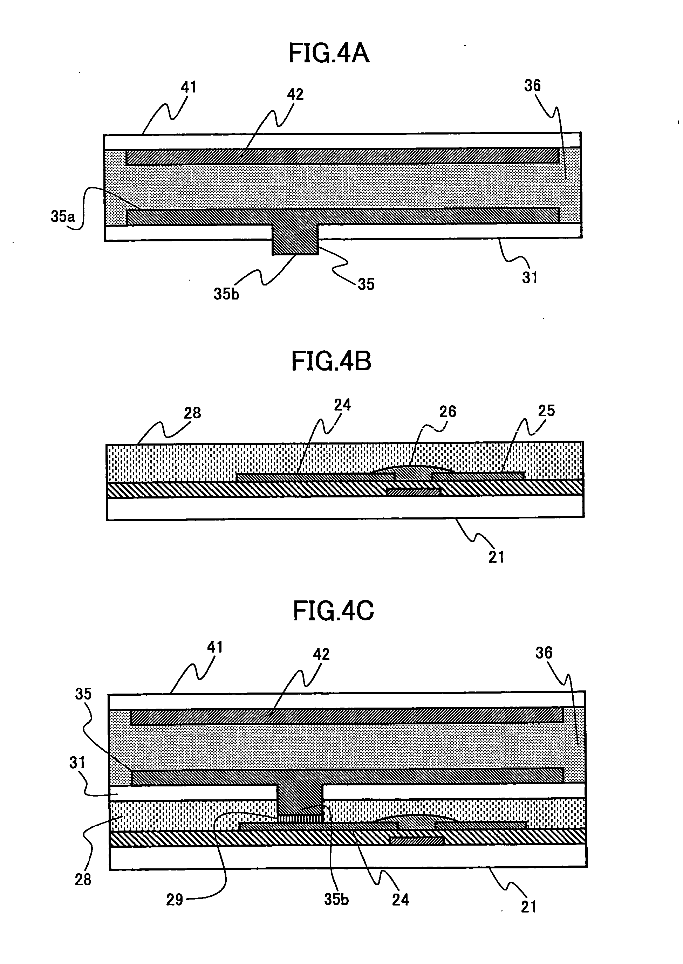

Next, as shown in FIG. 4A, the image displaying layer 36 is formed on the surface of the second substrate 31 on which the electrode 35a is formed, and thereafter the third substrate 41 on which the electrode 42 used as the opposing electrode is formed is bonded together to the displaying layer 36, so that an image displaying element is formed (the bonding region is not illustrated). The material of image displaying layer 36 in this embodiment is a material of an electrophoretic display element or a material of a liquid crystal display element.

Alternatively, in another embodiment, the second substrate 31 and the third substrate 41 may be bonded together such that the electrode 35a on the second substrate 31 faces the electrode 42 on the third substrate 41, and thereafter the image displaying layer 36 may be formed.

Next, the electrode 24 formed in the first substrate 21 on which the semiconductor chip used as the drive circuit is formed as shown in FIG. 4B, and the electrode 35b formed in the contact hole of the second substrate 31 are connected electrically. For this purpose, an anisotropic conduction film 28 is formed on the surface of the first substrate 21 on which the electrode 24 is formed. The anisotropic conduction film 28 may be formed by placing the marketed anisotropic conduction sheet on the surface of the first substrate 21 on which the electrode 24 is formed, or by applying the anisotropic conduction paste to this surface.

Next, as shown in FIG. 4C, by compressing the first substrate 21 and the second substrate 31 by pressure, the anisotropic conduction film 28 between the electrode 24 of the first substrate 21 and the electrode 35b formed in the contact hole of the second substrate 31 is compressed by pressure. Thus, an electrically conductive region 29 is formed, and the electrode 24 of the first substrate 21 and the electrode 35b formed in the contact hole of the second substrate 31 are connected electrically.

Thereby, the image display device which includes the three substrates 21, 31, and 41 is produced.

When the surface on which the third substrate 41 is formed is a visual recognition side of the display device, it is necessary to form the electrode 42 formed in the third substrate 41 and the third substrate 41 with a transparent material so as to make the substrate 41 and the electrode 42 transparent.

When the surface on which the first substrate 21 is formed is a visual recognition side of the display device, it is necessary to make the driver element formed in the first substrate 21 and the first substrate 21 transparent.

The drive circuit is formed in the first substrate 21, and the image displaying layer 36 which constitutes the image displaying element is formed in the third substrate 41. When the materials of the drive circuit and the image displaying layer 36 easily deteriorate due to the influence of the moisture or the atmosphere, it is necessary to improvement the passivation performance. It is preferred to form, in the inside or the outside of the first substrate 21 and the third substrate 41, a thin film of a material with low permeability to moisture or O₂ (oxygen), such as Si₃N₄.

In this embodiment, the film of Si₃N₄ is formed on the surfaced of the first substrate 21 and the third substrate 41 and the adhesive layer is formed between the respective substrates, although it is not illustrated. The display device of this embodiment has the structure for preventing the inclusion of moisture or oxygen.

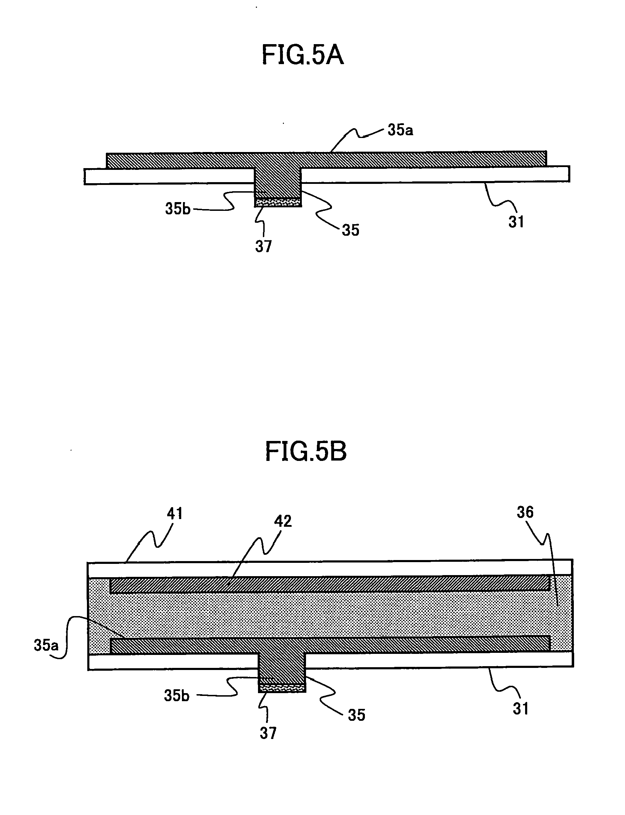

In the above embodiment, the anisotropic conduction film 28 is used. Alternatively, another bonding method may be used. FIG. 5A through FIG. 5D shows a manufacturing process of the display device of this embodiment using solder bonding.

As shown in FIG. 5A, a solder layer 37 is formed on an end face of the electrode 35b formed in the contact hole of the second substrate 31. This solder layer 37 may be formed by applying solder paste, or by forming a solder layer.

Next, as shown in FIG. 5B, an image displaying element is formed by bonding together the third substrate 41 that forms the image displaying layer 36 on the surface on which the electrode 35a of the second substrate 31 is formed and by which the opposing electrode and becoming electrode 42 are further formed on it.

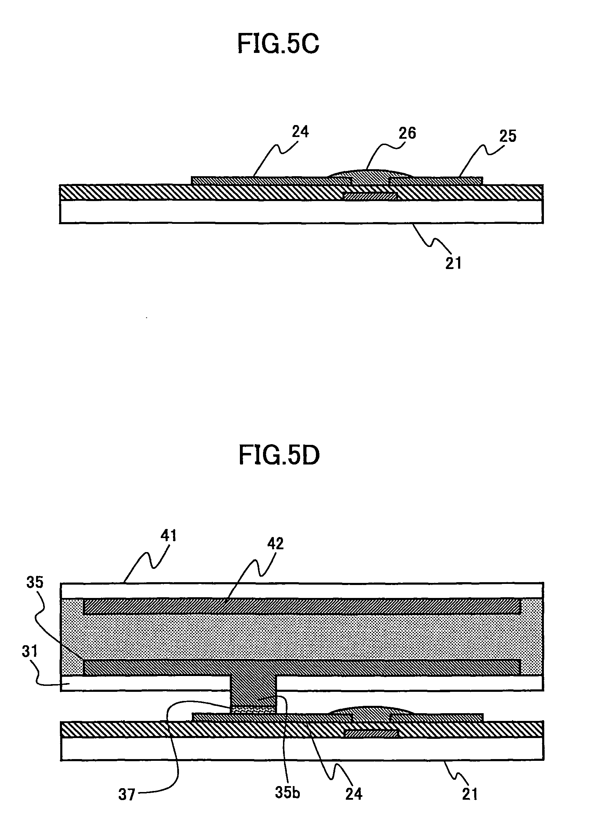

Next, the electrode 24 formed in the first substrate 21 in which the semiconductor chip used as the drive circuit shown in FIG. 5C is formed, and electrode 35b formed in the contact hole of the second substrate 31 are connected electrically. The electrode 24 of the first substrate 21 and the electrode 35b formed in the contact hole of the second substrate 31 are electrically connected by performing local heating on the surface on which the solder layer 37 is formed, and melting the solder layer 37. Thereby, as shown in FIG. 5D, the image display device which includes the three substrates 21, 31, and 41 is produced.

It is also possible to stick electrode 24 of the first substrate 21 and electrode 35b of the second substrate 31 directly, and to take electric junction, without forming the solder layer 37.

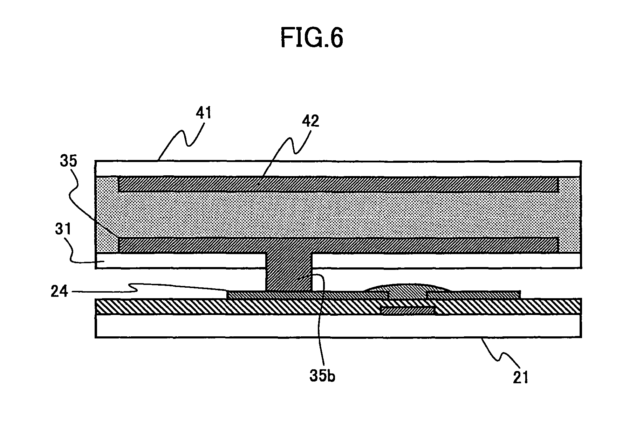

FIG. 6 shows the composition of the display in this case. When taking the electric connection of the electrode of the first substrate 21, and electrode 35b of the second substrate 31 using anisotropic conduction film 28, the flat composition of the surface of electrode 35b formed in the contact hole used as a junction area is preferred.

On the other hand, as for the surface of electrode 35b formed in the contact hole used as a junction area, being processed to a rough surface it is preferred that when taking the electric connection of the electrode of the first substrate 21, and electrode 35b formed of the contact hole of the second substrate 31, without using anisotropic conduction film 28.

Specifically, roughing of the surface is performed by dipping this portion in an etching solution short time. Because the image display device of this embodiment does not need to form an interlayer insulation film, it can be formed in a low-temperature process, and it can be manufactured for a short time, without having a bad influence on a semiconductor chip.

Because the electrode is formed in the surface of each substrate, it becomes possible to eliminate the defect which does not form an electrode pattern on an interlayer insulation film, and originates in high resistance of disconnection or wiring.

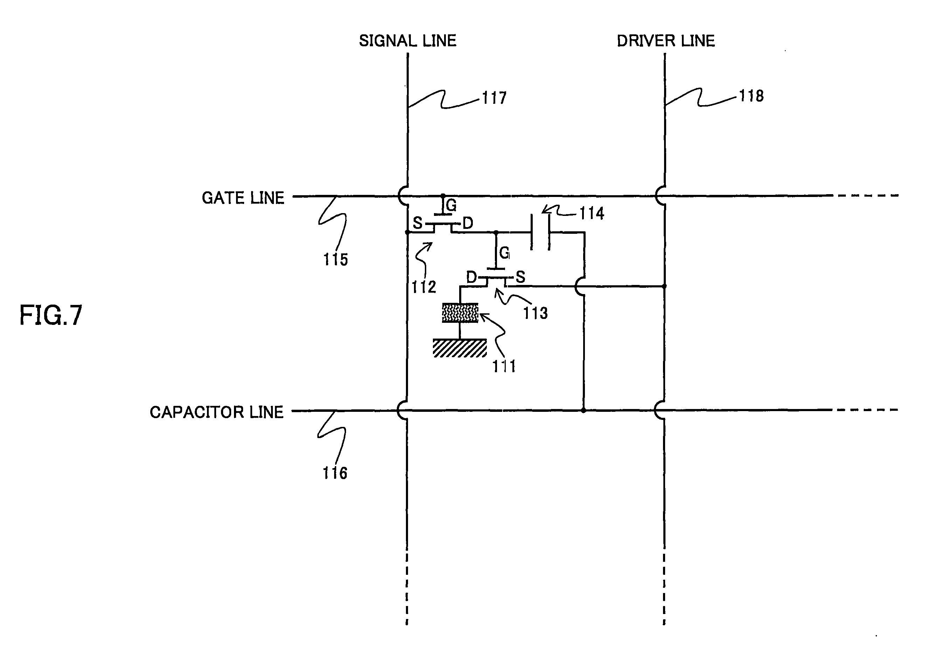

Next, a second embodiment of the invention will be described. This embodiment relates to a method of manufacturing an electrophoretic display device. The composition of a drive circuit for driving the electrophoretic display device of this embodiment is shown in FIG. 7.

Specifically, as shown in FIG. 7, the drive circuit of this embodiment is a drive circuit which supplies current to a current drive type display element to drive the display element. To drive the display element 111 which is an electrophoretic display element used as one pixel, two FETs (field effect transistors) 112 and 113, and a pixel capacitor 114 are formed for every pixel.

In the FET 112, the gate (G) is connected to the gate line 115, the source (S) is connected to the signal line 117, and the drain (D) is connected to both the gate (G) of the FET 113 and the electrode of the pixel capacitor 114. The electrode of another side of the pixel capacitor 114 is connected to the capacitor line 116.

In the FET 113, the source (S) is connected to the driver line 118, and the drain (D) is connected to one electrode of the display element 111. The electrode of another side of the display element 111 is grounded.

Next, the manufacturing process of the display device of this embodiment will be described.

The drive circuit of the display device of this embodiment includes three substrates in which respective electrodes are formed. For the sake of convenience, a description of the region in which the pixel capacitor is formed will be omitted.

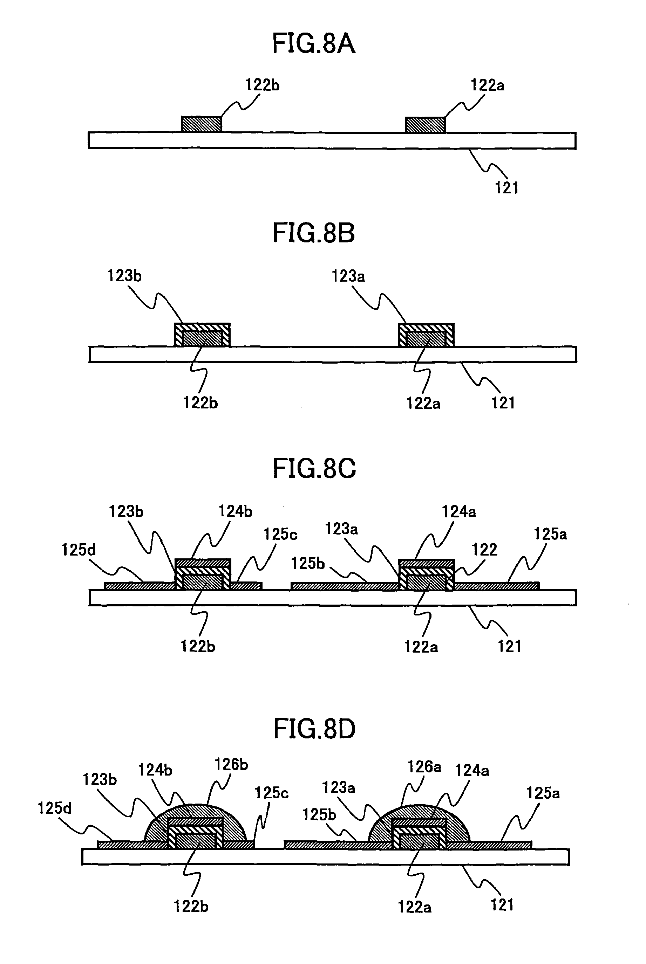

As shown in FIG. 8A, the electrodes which are formed on the surface of the first substrate 121 as gate electrodes 122a and 122b, a gate line 115, and a capacitor line 116 are formed (the capacitor line 116 and the gate line 115 are not shown in FIG.8A - FIG. 8D).

A desired material of the first substrate 121 in this embodiment is an inorganic insulating material, such as SiO₂, or an organic insulating material, such as polyimide resin, styrene resin, polyethylene base resin, polypropylene, vinyl chloride base resin, polyester alkyd resin, polyamide, polyurethane, polycarbonate, polyarylate, polysulfone, diallyl phthalate resin, polyvinyl butyral resin, polyether resin, polyester resin, acrylic resin, silicone resin, epoxy resin, phenol resin, urea resin, melamine resin, fluorine base resin (PFA, PTFE, PVDF, etc.), parylene resin, epoxy acrylate, a photo-curing resin (urethane-acrylate, etc.), polysaccharide or its dielectric, such as pullulan cellulose. The substrate 121 may be formed with a film of the above-mentioned material deposited on the surface of a film-like conductive material. It is preferred that the volume resistivity of the material of the substrate 121 of this embodiment is above 1 x 10¹³ Q-cm. It is more preferred that the volume resistivity of the material of the substrate 121 of this embodiment is above 1 x 10¹⁴ Ω-cm. A desired material of the substrate that can be used as the second substrate 131 or the third substrate 141 (which will be described later) is the same as the above-mentioned material of the first substrate 121.

A desired material which can be used for the gate electrodes 122a and 122b is at least one chosen from the group including a metal, such as Cr (chromium), Ta (tantalum), Ti (titanium), Cu (copper), Al (aluminum), Mo (molybdenum), W (tungsten), Ni (nickel), Au (gold), Pd (palladium), Pt (platinum), Ag (silver), Sn (tin), any of their alloys, a transparent electrode material made of ITO, indium oxide or zinc oxide, a polyacethylene base conductive polymer material, a polyphenylene base conductive polymer material, such as polyparaphenylene or its dielectric, polyphenylene vinylene or its dielectric, a heterocyclic base conductive polymer material, such as polypyrole or its dielectric, polythiophene or its dielectric, polyfuran or its dielectric, and an ionic conductive polymer material, such as polyaniline or its dielectric.

One of the above-mentioned conductive polymers may be subjected to doping with a suitable dopant so as to obtain a higher conductivity. It is desirable to use a dopant having a low vapor pressure for the above-mentioned doping. A desired material of the dopant is any of polysulfone acid, polystyrene sulfonate, naphthalene sulfonic acid, alkyl naphthalene sulfonic acid, etc. A metal, an alloy, or a conductive polymer may be used together with the dopant in this embodiment. A desired material of the gate electrode that can be used for the second substrate 131 and the third substrate 141 (which will be described later) is the same as the above-mentioned material for the first substrate 121.

The method of forming the gate electrode in this embodiment is a vacuum film deposition process, such as vacuum evaporation, sputtering, or CVD. After the film of the metallic material of the electrode is deposited in the whole surface, the application of a photoresist, the prebaking, the exposure by an exposure device, and the developing are performed so that a resist is formed in the region used as an electrode pattern. Then, the etching of the formed resist pattern, such as RIE (reactive ion etching), is performed so that the gate electrode is formed. Alternatively, the electrode forming method may be any of the ink jet method using an ink-like conductive material, the letterpress printing method, such as flexographic printing, the intaglio printing method, the screen printing method, the mimeographic printing method, the offset printing method, etc. In the case of forming the electrode by printing, the electrode can be formed quickly with a low cost. Furthermore, the electrode may be formed by metal plating. In the case of the metal plating, it is possible to form a thin electrode film with a low resistance using a simple processing unit. The metal plating is advantageous when it is intended to increase the electrode film thickness.

In this manner, as shown in FIG. 8A, the gate electrodes 122a and 122b, the gate line 115, and the capacitor line 116 are formed on the first substrate 121.

Next, as shown in FIG. 8B, the gate insulating layers 123a and 123b are formed on the surface of the first substrate 121 on which the gate electrodes 122a and 122b are formed. A desired material which of the gate insulating layer 123 of this embodiment is any of an inorganic insulating material, such as SiO₂ (silicon dioxide), Ta₂O₅ (tantalum pentoxide), and Al₂O₃ (alumina), and an organic insulating material, such as polyimide resin, styrene resin, polyethylene base resin, polypropylene, vinyl chloride base resin, polyester alkyd resin, polyamide, polyurethane, polycarbonate, polyarylate, polysulfone, diallyl phthalate resin, polyvinyl butyral resin, polyether resin, polyester resin, acrylic resin, silicone resin, epoxy resin, phenol resin, urea resin, polysaccharide (melamine resin), fluorine base resin (PFA, PTFE, PVDF, etc.), parylene resin, epoxy acrylate, a photo-curing resin (urethane-acrylate, etc.), polysaccharide or its dielectric, such as pullulan cellulose. It is preferred that the volume resistivity of the gate insulating layer of this embodiment is above 1 x 10¹³ Ω-cm. It is more preferred that the volume resistivity of the gate insulating layer of this embodiment is above 1 x 10¹⁹ Ω-cm.

The method of forming the gate insulating layers 123a and 123b in this embodiment is any of the vacuum deposition method, such as vacuum evaporation, sputtering, or CVD, the letterpress printing method, such as flexographic printing, the intaglio printing method, the screen printing method, the mimeographic printing method, the offset printing method, the anode oxidation method, the spin coat method, the dipping method, the spray coat method, the ink jet method, etc.

In this manner, the gate insulating layers 123a and 123b are formed to cover the surface of the gate electrodes 122a and 122b on the first substrate 121 as shown in FIG. 8B.

Next, as shown in FIG. 8C, in the first substrate 121, the electrodes 124a, 124b, 125a, 125b, 125c, and 125d are formed on the surface on which the gate insulating layers 123a and 123b are formed.

The electrodes 125a, 125b, 125c, and 125d are electrodes which are used as the drain (D) and the source (S) of each FET, by forming semiconductor layers thereon in the next step.

Specifically, after a metallic film of Cu etc. is formed on the whole surface of the substrate 121 on which the gate insulating layers 123a and 123b are formed, by sputtering, a photoresist is applied and the exposure by the exposure device, and the development are performed so that a resist pattern is formed on the electrodes where the drain and the source are formed. Next, the metallic film in the region in which the resist is not formed is removed by RIE, and the resist is finally removed with an organic solvent, so that the electrodes 124a, 124b, 125a, 125b, 125c, and 125d are formed.

Next, as shown in FIG. 8D, in the regions which are located above the gate electrodes 122a and 122b, the semiconductor layer 126a that touches both the electrodes 125a and 125b, and the semiconductor layer 126b that touches both the electrodes 125c and 125d are formed, respectively.

The electrodes 125a and 125b are electrodes for forming the drain and the source of the FET, and a channel is formed by the semiconductor layer 126a via the electrode 125a. Similarly, the electrodes 125c and 125d are electrodes for forming the drain and the source of the FET, and a channel is formed by the semiconductor layer 126b via the electrode 125d.

A desired material of the semiconductor layers 126a and 126b in this embodiment is any of an organic semiconductor material chosen from the group including fluorene, polyfluorene derivative, polyfluorenone, fluorenone dielectric, poly-N-vinylcarbazole dielectric, poly-γ-carbazolylethylglutamate dielectric, polyvinyl phenanthrene dielectric, polysilane dielectric, oxazole dielectric, oxadiazole dielectric, allylamine dielectrics, imidazole derivative, allylamine derivative (mono-allylamine, tri-allylamine derivative), benzidine dielectric, diallylmethane dielectric, tri-allylmethane dielectric, styrylanthracene derivative, pyrazoline dielectric, divinylbenzene dielectric, hydrazone derivative, indene dielectric, indenone dielectric, butadiene dielectric, pyrene formaldehyde, pyrene dielectric (polyvinyl pyrene), stilbene derivative (alpha-phenyl stilbene derivative, bis-stilbene derivative), enamine dielectric, and thiophene dielectric (polyalkyl-thiophene dielectric, benzothieno-benzothiophene dielectric), an organic semiconductor material chosen from the group including pentacene, tetracene, bis-azo or tris-azo base coloring matter, poly-azo base coloring matter, triallylmethane base coloring matter, thiadin base coloring matter, oxadin base coloring matter, xanthene base coloring matter, cyanine base coloring matter, styllyl base coloring matter, pyrylium base coloring matter, quinacridone base coloring matter, indigo base coloring matter, perylene base coloring matter, multi-ring quinone base coloring matter, bis-benz-imidazole base coloring matter, indanslone base coloring matter, squarylium base coloring matter, anthraquinone base coloring matter, porphyrin base coloring matter, and phthalocyanine base coloring matter (copper phthalocyanine, thitanile phthalocyanine), a compound semiconductor chosen from the group including CdS, ZnO, PbTe, PbSnTe, InGaZnO, GaP, GaAlAs, and GaN, and a silicon semiconductor material (polycrystalline silicon, amorphous silicone).

The method of forming the semiconductor layers 126a and 126b in this embodiment is the vacuum film deposition process, such as vacuum evaporation, sputtering, or CVD. After the film of the semiconductor material is deposited in the whole surface, the application of a photoresist, the prebaking, the exposure by an exposure device, and the developing are performed so that a resist is formed in the region used as a semiconductor layer. Then, the etching of the formed resist pattern, such as RIE (reactive ion etching), is performed so that the semiconductor layer is formed. Alternatively, the semiconductor layer forming method may be any of the ink jet method using an ink-like conductive material, the letterpress printing method, such as flexographic printing, the intaglio printing method, the screen printing method, the mimeographic printing method, the offset printing method, etc. In the case of forming the semiconductor layers 126a and 126b by printing, the application of a photoresist and the exposure process using the exposure device may be omitted, and the semiconductor layers 126a and 126b can be formed with a low cost in a short time.

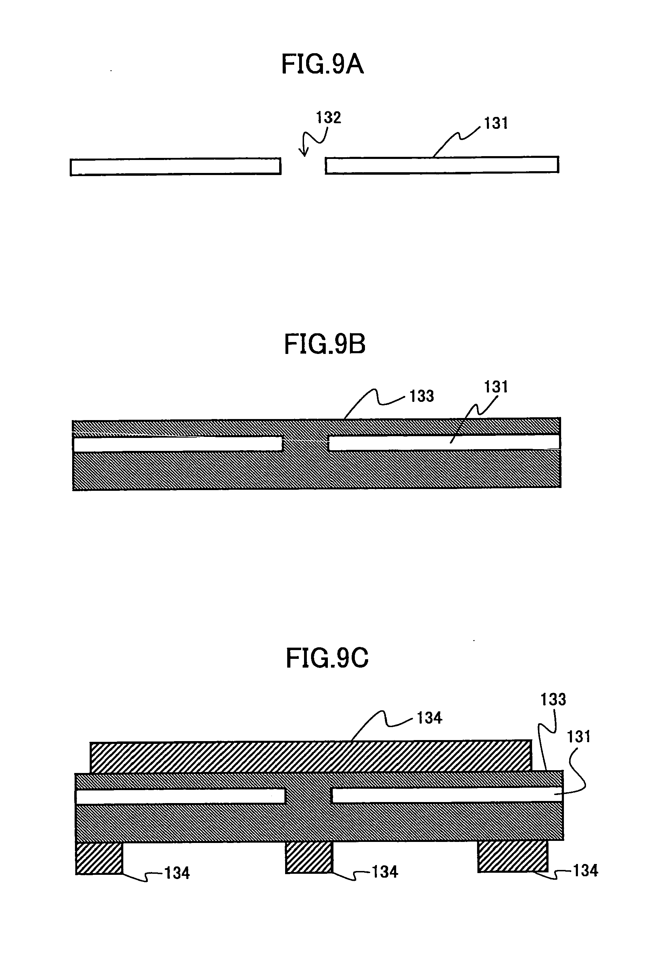

Next, through a manufacturing process that is separate from the above-mentioned manufacturing process, the portion of the display device of this embodiment which is used as an image displaying element is produced. A description will be given of this manufacturing process with reference to FIG. 9A - 10C.

As shown in FIG. 9A, a contact hole 132 is formed in the second substrate 131. The method of forming the contact hole 132 in this embodiment is any of the laser processing method, the etching method, and the molding method. Specifically, in the case of the etching method, a photo resist is applied in the whole surface other than the region where the contact hole 132 is to be formed, the wet etching or the dry etching is performed so that the contact hole 132 is formed. In the case of the molding method, the substrate material is fused, and the molten material is hardened by cooling.

Next, as shown in FIG. 9B, the electroless deposition process of the second substrate 131 is performed. By this process, a metallic film 133 adheres to the exposed surfaces of the second substrate 131 (i.e., both the front and back surfaces of the second substrate 131 and the contact hole 132). In the case of the electroless deposition process, the metallic film 133 efficiently adheres to not only the surfaces of the second substrate 131 but also the contact hole 132, and the metallic film 133 is formed homogeneously. The method of forming the metallic film 133 in this embodiment may be the vacuum film deposition process, such as vacuum evaporation, sputtering, or CVD, other than the above-mentioned electroless deposition process. In the case of the CVD process, the step coverage is good, and it is preferred to use the CVD process when forming an electrode in a contact hole.

Next, as shown in FIG. 9C, after applying photoresist all over the second substrate 131 in which metallic film 133 is formed, prebaking is performed, and negatives are developed after exposing with the exposing device. Thereby, the pattern which consists of photoresist 134 is formed only in the region to which an electrode is formed on metallic film 133.

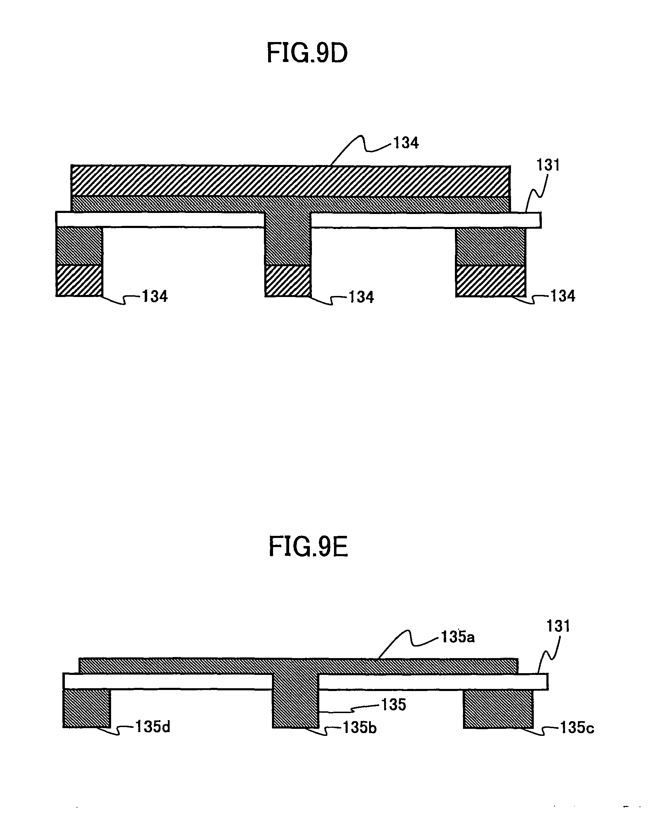

Next, as shown in FIG. 9D, the metallic film 133 in the region in which the photoresist 134 is not formed is removed by etching, such as RIE.

Next, as shown in FIG. 9E, the electrode 135 is formed on the second substrate 131 by removing the photoresist 134 with an organic solvent etc.

The electrodes 135 includes an electrode 135c used as an electrode 135b formed in that from which one surface serves as the electrode 135a of the display element, and a contact hole 132 formed on the other surface thereof, an electrode 135c used as driver line 118, and signal line 117. The electrodes 135b, 135c, and 135d surface is projected and formed rather than the surface of the second substrate 131, and serves as convex-like form.

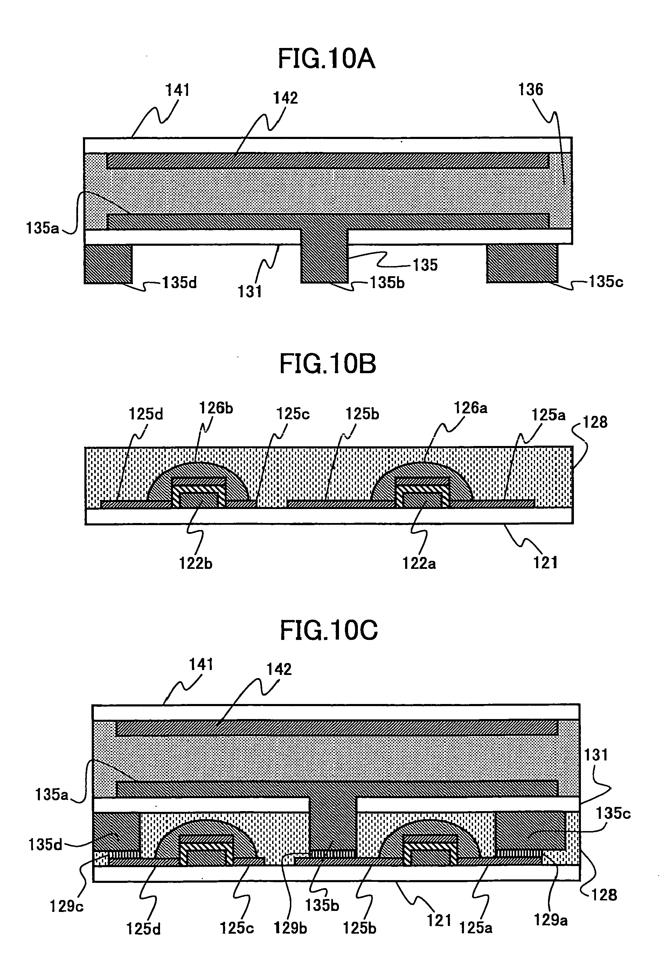

Next, as shown in FIG. 10A, a display element is formed by bonding together the third substrate 141 that forms the image displaying layer 136 on the surface on which the electrode 135a of the second substrate 131 is formed and by which the opposing electrode and becoming electrode 142 are further formed on it.

The material which constitutes a liquid crystal display element besides the material from which image displaying layer 136 of this embodiment constitutes an electrophoretic display element, an electroluminescent (EL) display element, an electrochromic display element, an electrodeposition display element, etc. is mentioned.

Next, the electrodes 125b, 125a, and 125d formed in the first substrate 121 in which the semiconductor chip used as the drive circuit shown in FIG. 10B is formed.

The electrode 135b formed in the contact hole of the second substrate 131, electrode 135c used as driver line 118, and 135d of electrodes used as signal line 117 are connected electrically. For this reason, an anisotropic conduction film 128 is formed on the surface on which the electrodes 125a, 125b, and 125d of the first substrate 121 are formed. The anisotropic conduction film 128 is formed by the method of covering the surface on which the electrodes 125a, 125b, and 125d of the first substrate 121 are formed by the anisotropic conduction sheet marketed, and the method of applying anisotropic conduction paste to this surface.

Next, by making the first substrate 121 and second substrate 131 stick by pressure, as shown in FIG. 10C, anisotropic conduction film 128 between electrode 125b of the first substrate 121 and electrode 135b formed in the contact hole of the second substrate 131 is stuck by pressure.

The region 129b which electric conduction nature produced is formed, and electrode 125b of the first substrate 121 and electrode 135b formed in the contact hole of the second substrate 131 are connected electrically.

Similarly, the anisotropic conduction film 128 between electrode 125a of the first substrate 121 and electrode 135c of the second substrate 131 is stuck by pressure.

The region 129a which electric conduction nature produced is formed, and electrode 135c used as electrode 125a of the first substrate 121 and driver line 118 of the second substrate 131 is connected electrically.

Similarly, the anisotropic conduction film 128 between 125d of electrodes of the first substrate 121 and 135d of electrodes of the second substrate 131 is stuck by pressure.

The region 129c which electric conduction nature produced is formed, and 135d of electrodes used as 125d of electrodes of the first substrate 121 and signal line 117 of the second substrate 131 are connected electrically. Thereby, the display device which includes three substrates is produced.

When the surface on which the third substrate 141 is formed is a visual recognition side of a display, it is necessary to form electrode 142 formed in the third substrate 141 and third substrate 141 with a transparent base and a clear electrode.

When the surface on which the first substrate 121 is formed is a visual recognition side of a display, it is needed that the driver element formed in the first substrate 121 and first substrate 121 is transparent.

The drive circuit etc. is formed in the first substrate 121, and the third substrate 141, the image displaying layer 136 which constitutes a display element is formed, when the drive circuit and image displaying layer 136 use the material which deteriorates under the influence of moisture or the atmosphere. It is desirable to form the penetrable low thin film of the moisture of Si₃N₄ or O₂ in the inside or the outside of the first substrate 121 and the third substrate 141 because of the improvement in passivation performance.

In this embodiment, although the graphic display has not been carried out, the film which consists of such Si3N4 grade is formed in the surface of the first substrate 121 and the third substrate 141, and between each substrates, it has pasted up with adhesives and has structure which prevented trespass of moisture or oxygen.

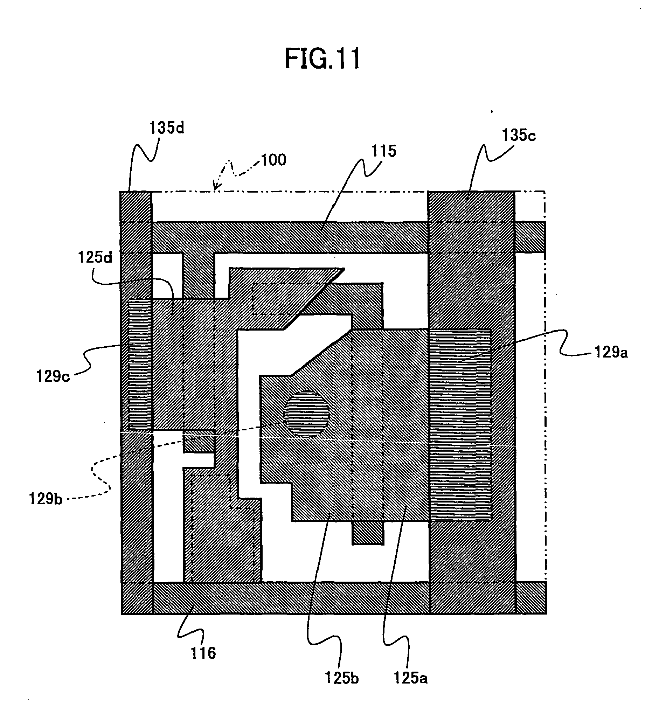

Next, in FIG. 11, the composition of the electrode wiring per stroke matter 100 between the first substrate 121 of the image display device of this embodiment and the second substrate 131 is shown.

The electrode 125a formed on the first substrate 121 and electrode 135c formed in the second substrate 131 are specifically set to the region 129a. The electrode 125d formed in the first substrate 121 and the electrode 135d formed in the second substrate 131 are set to the region 129c.

In the region 129b, by sticking anisotropic conduction film 128 by pressure respectively, conductivity arises and electrode 125b formed in the first substrate 121 and electrode 135b formed in the contact hole of the second substrate 131 are bonded.

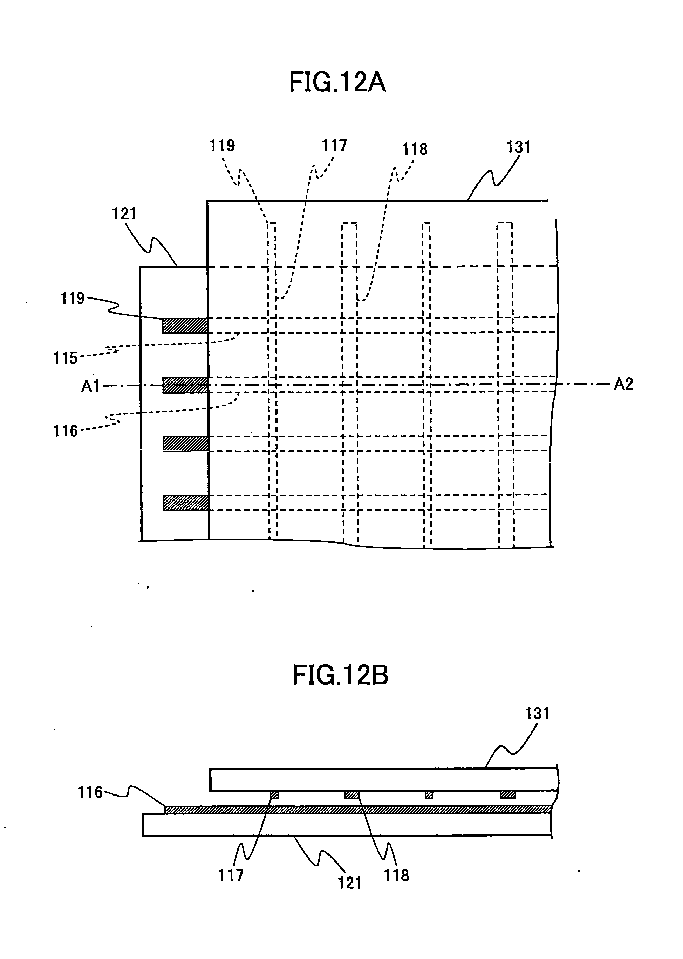

Next, the junction composition of the first substrate 121 and the second substrate 131 will be described. FIG. 12A and FIG. 12B are diagrams showing the junction composition of the first substrate 121 and the second substrate 131.

FIG. 12A is a top view of the junction composition, and FIG. 12B is a cross-sectional view of the junction composition taken along the line A1-A2.

Connection of the first substrate 121 and the second substrate 131 is connected by shifting the second substrate 131 in the drawings, a sliding direction, and a horizontal direction, and connecting to the first substrate 121, as shown in FIG. 12A and FIG. 12B_{.}

By connecting with such composition, the lead electrode 119 of the gate line 115, the capacitor line 116, the signal line 117, and the driver line 118 can be secured on the substrates of both the first substrate 121 and the second substrate 131.

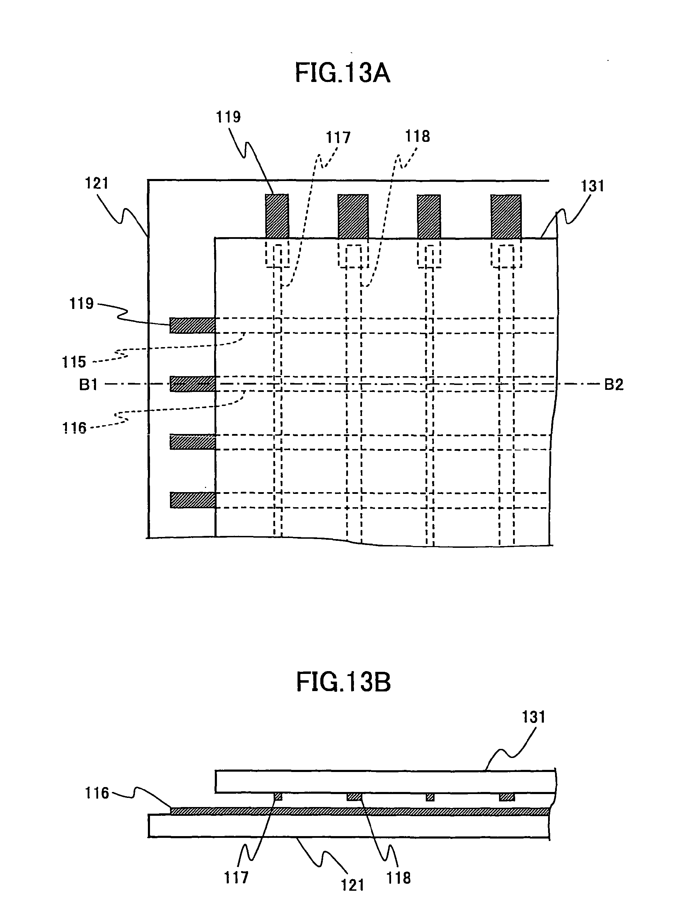

FIG. 13A and FIG. 13B show another junction composition at the time of connecting the first substrate 121 and the second substrate 131. FIG. 13A is a top view of the composition, and FIG. 13B is a cross-sectional view of the composition taken along the line B1-B2.

By connecting with the first substrate 121 using the second somewhat small substrate 131 to the first substrate 121, as shown in FIG. 13A and FIG. 13B.

In the substrates of both the first substrate 121 and the second substrate 131, the lead electrode 119 of the gate line 115, the capacitor line 116, the signal line 117, and the driver line 118 can be secured. In this case, the signal line 117 formed in the second substrate 131 and the driver line 118 serve as the composition connected to the lead electrode 119 formed in the first substrate 121.

Because it is a uniform direction and lead electrode 119 can be formed on the same surface using the same composition, it becomes the composition of having been suitable for manufacture.

This lead electrode 119 is because it is formed in order to take the exterior and electric connection with the bonding method of a wire bond etc., and it is necessary to secure the work area in the case of connection enough.

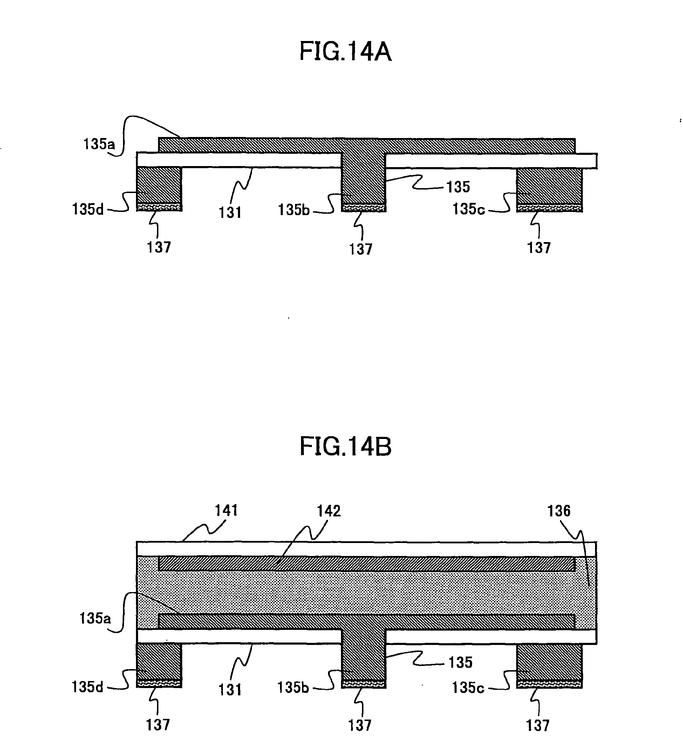

Although this embodiment explained the case where anisotropic conduction film 128 is used, there is a method of using pewter as shown in FIG. 14A through FIG. 14D as the other connection methods.

As shown in FIG. 14A, specifically, solder layer 137 is formed in a part for the point of electrode 135b formed in the contact hole of the second substrate 131.

The solder layer 137 is formed also in a part for the point of electrode 135c which similarly serves as driver line 118 formed in the second substrate 131, and 135d of electrodes used as signal line 117. This solder layer 137 may be formed by applying solder paste, even if it forms pewter.

Next, as shown in FIG. 14B, an image displaying element is formed by bonding together the third substrate 141 that forms the image displaying layer 136 on the surface on which electrode 135a of the second substrate 131 is formed and by which the opposing electrode and becoming electrode 142 are further formed on it.

The composition which does not have the third substrate 141 is also considered as other composition. In this case, the electrode is formed in two or more contact holes of the second substrate 131 and the first substrate 121 and second substrate 131 are fixed stably, and even if it is the composition of only an electrode, without having the third substrate 141, in a manufacturing process, it can manufacture satisfactorily, and as a manufacturing process, it becomes more advantageous than the first embodiment.

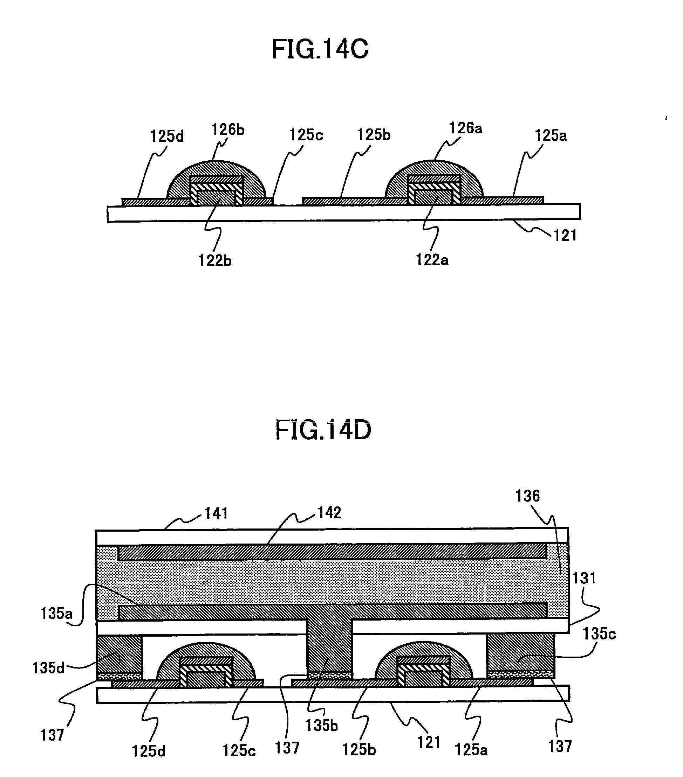

Next, the electrodes 125b, 125a, and 125d formed in the first substrate 121 in which the semiconductor chip used as the drive circuit shown in FIG. 14C is formed, the electrode 135b formed in the contact hole of the second substrate 131, electrode 135c used as driver line 118, and 135d of electrodes used as signal line 117 are connected electrically.

The electrode 125b of the first substrate 121 and the electrode 135b formed at this time in the contact hole of the second substrate 131 are electrically connected by locally heating the surface on which the solder layer 137 is formed, and melting pewter of solder layer 137.

The electrode 135c which similarly serves as electrode 125a and the driver line 118 of the second substrate 131 which are formed in the first substrate 121 is connected electrically.

The electrode 135d used as the electrode 125d formed in the first substrate and the signal line 117 formed in the second substrate 131 are connected electrically.

Thereby, as shown in FIG. 14D, the display device which includes three substrates is produced. It is also possible to directly bond the electrodes 125a, 125b and 125d of the first substrate 121 and the electrodes 135c, 135b and 135d of the second substrate 131 together to establish electric connection without forming the solder layer 137.

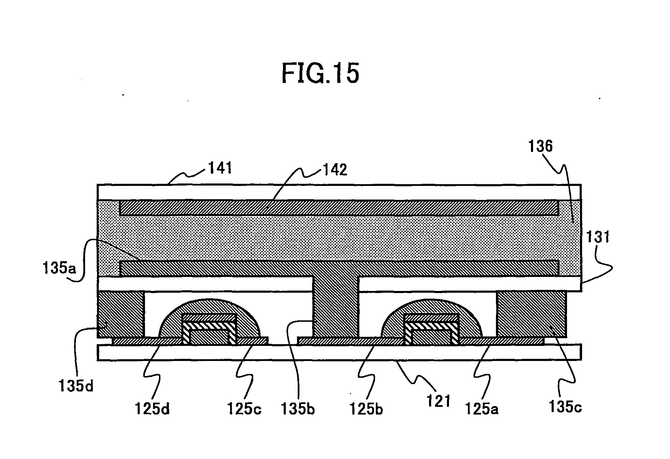

FIG. 15 shows the composition of the display device in this case. When forming the electric connection of the electrodes of the first substrate 121 and the electrodes of the second substrate 131 using the anisotropic conduction film 128, it is preferred to make flat the surface of the electrodes 135b, 135c and 135d formed in the second substrate 121.

On the other hand, when forming the electric connection of the electrodes of the first substrate 121 and the electrodes of the second substrate 131, without using the anisotropic conduction film 128, it is preferred to perform a surface roughing process to the surface of the electrodes 135b, 135c and 135d formed in the second substrate 121. Specifically, the surface roughing process is performed by dipping this portion in an etching solution for a short time.

Because the display device of this embodiment does not need to form an interlayer insulation film, it can be formed by a low-temperature process, and it can be manufactured in a short time without adversely influencing the semiconductor chip. Moreover, the electrodes are formed on the surface of each substrate, and it is possible to eliminate the defect caused by a disconnection of wiring or a high-resistance wiring, without forming any electrode pattern on the interlayer insulation film.

Next, the third embodiment of the invention will be described. The third embodiment is the TFT or the transistor which is applicable to the first substrate 21 or 121.

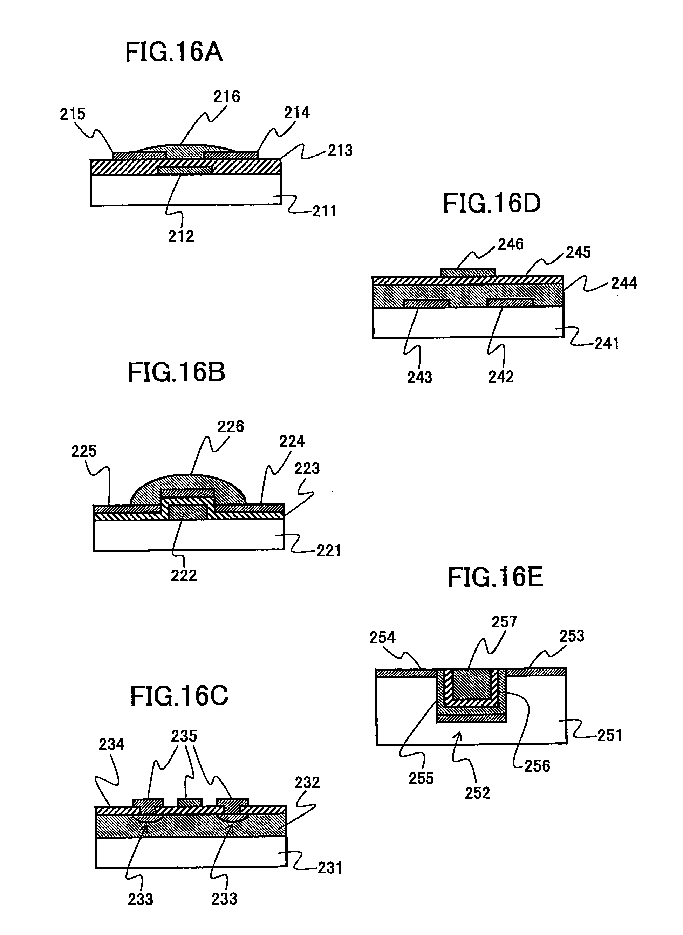

FIG. 16A shows the composition that is of the same type as in the first embodiment. The gate electrode 212 is formed on the first substrate 211, the gate insulating layer 213 is formed on the gate electrode 212, and the drain electrode 214 and the source electrode 215 are formed on the gate insulating layer 213. And the semiconductor layer 216 is formed thereon.

FIG. 16B shows the composition that is of the same type as in the second embodiment. The gate electrode 222 is formed on the first substrate 221, the gate insulating layer 223 is formed on the gate electrode 222, and the drain electrode 224 and the source electrode 225 are formed on the gate insulating layer 223. And the semiconductor layer 226 is formed thereon.

FIG. 16C shows the composition in which, after the semiconductor layer 232 is formed on the first substrate 231, the region 233 with a high impurity concentration is formed, and the insulating layer 234 is formed. And the electrodes 235 used as the gate, the source, and the drain are formed.

FIG. 16D shows the composition in which the drain electrode 242 and the source electrode 243 are formed on the first substrate 241, the semiconductor layer 244 is formed thereon, and the insulating layer 245 is formed on the semiconductor layer 244. And the gate electrode 246 is formed on the insulating layer 245.

FIG. 16E shows the composition in which, after forming the trench 252 is formed in the first substrate 251, the drain electrode 253 and the source electrode 254 are formed by depositing a metallic film. After the semiconductor layer 255 is formed inside the trench 252, the insulating layer 256 is formed and the gate electrode 257 is formed.

As for the TFT or the transistor of this embodiment, the first embodiment and the second embodiment are applicable. As for the TFT or the transistor in another composition, an embodiment of the invention is applicable.

Next, the fourth embodiment of the invention will be described.

The fourth embodiment is formation method with another electrode of the second substrate 31 and 131 about the first embodiment and second embodiment, and explains the case where an electrode is formed in what serves as the second substrate 131 of the second embodiment concretely.

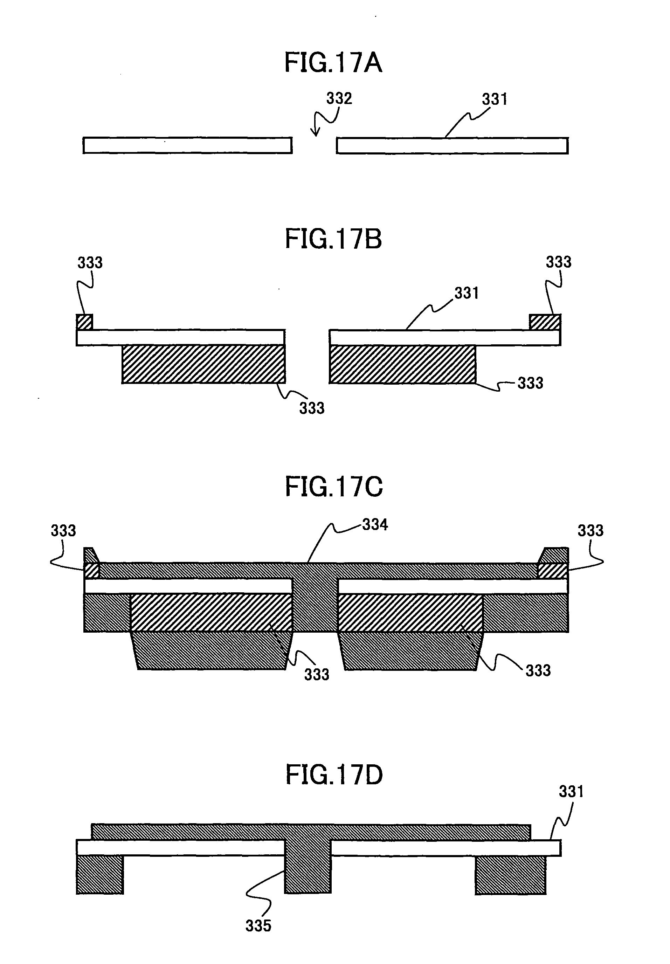

First, as shown in FIG. 17A, contact hole 332 is formed in the second substrate 331. The formation method is the same as that of the first embodiment and the second embodiment.

Next, as shown in FIG. 17B, resist pattern 333 is formed in the region in which the electrode of both sides of the second substrate 331 is not formed. After applying resist to both sides of the second substrate 331, specifically, resist pattern 333 is formed by performing prebaking, exposure by the exposing device, and development.

As for this resist pattern, it is desirable to form more thickly than the thickness of the electrode formed behind. It is possible to form the resist pattern of thickness which is different by both sides by making the spreading conditions and exposure conditions of resist into the conditions which differ by both sides.

Next, as shown in FIG. 17C, metallic film 334 is formed in both sides of the second substrate 331 in which resist pattern 333 is formed. Vacuum processes, such as vacuum evaporation and sputtering, perform the formation method of this metallic film 334. It is possible to form the metallic film of thickness which is different by both sides by making membrane formation conditions into the conditions which differ by both sides.

Next, as shown in FIG. 17D, electrode 335 is formed by performing lift-off by removing metallic film 334 formed on the resist pattern 333. The metallic film 334 on the resist pattern 333 is simultaneously removed by dipping the second substrate 331 after metallic film 334 shown in FIG. 17C is formed in an organic solvent etc., and dissolving resist pattern 333.

The second substrate 331 in which this electrode 335 is formed is equivalent to what formed electrode 135 in the second substrate 131 of the second embodiment.

Because an electrode can be formed according to this embodiment, without performing etching, such as RIE, it is advantageous when forming an electrode thickly.

Next, the fifth embodiment of the invention will be described. The fifth embodiment is the case where an electrode is formed in the second substrate 131 using another formation method of the electrode of the second substrate 31 or 131, other than that used in the first embodiment and the second embodiment.

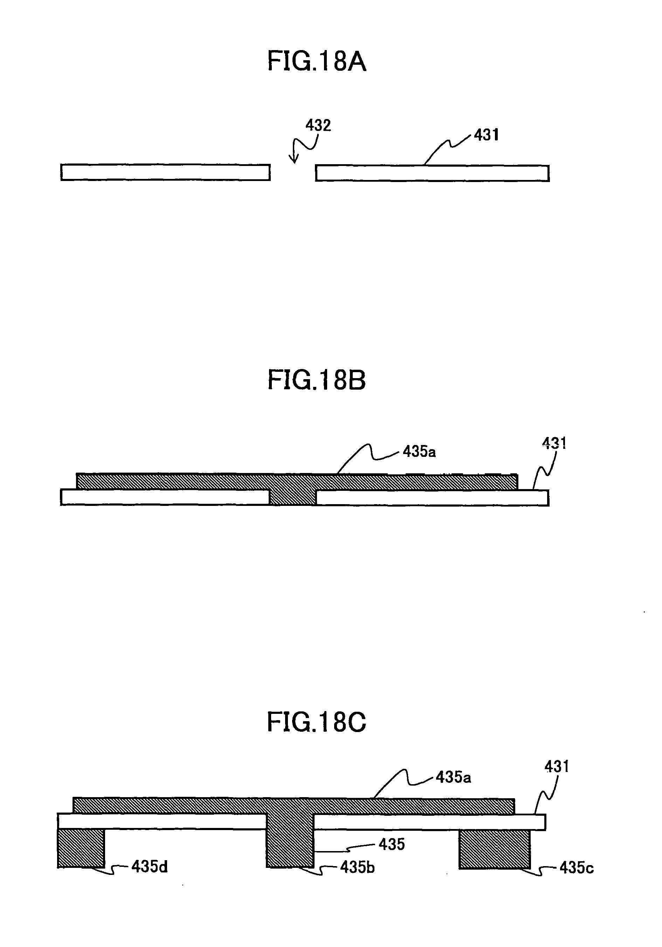

First, as shown in FIG. 18A, the contact hole 432 is formed in the second substrate 431. The formation method is the same as that of the first embodiment and the second embodiment.

Next, as shown in FIG. 18B, a metal paste is applied to one surface of the second substrate 431 by the printing method, such as screen printing, and the baking is performed so that the metal layer 435a is formed.

Next, as shown in FIG. 18C, a metal paste is applied to the other surface of the second substrate 431 by the printing method, such as screen printing, and the baking is performed similarly so that the metal layers 435b, 435c and 435d are formed. The electrodes 435 on both the surfaces which include the metal layers 435a, 435b, 435c, and 435d are formed in the second substrate 431.

By using the different conditions for printing at the time of performing the printing method for the two surfaces, it is possible to form the metal layer of different thickness.

There is the method of applying the nano metal ink by the ink jet method as a method of forming the electrodes 435 on both the surfaces of the second substrate 431 shown in FIG. 18A

simultaneously.

The second substrate 431 in which the electrodes 435 are formed is equivalent to the second substrate 131 of the second embodiment in which the electrode 135 is formed.

According to this embodiment, an electrode can be formed without performing the vacuum process, and a thicker electrode can be formed in a short time with a low cost.

Next, the sixth embodiment of the invention will be described. The sixth embodiment explains the case where an electrode is formed in what is another formation method of the electrode of the second substrate 31, and serves as the second substrate 31 of the first embodiment about the first embodiment.

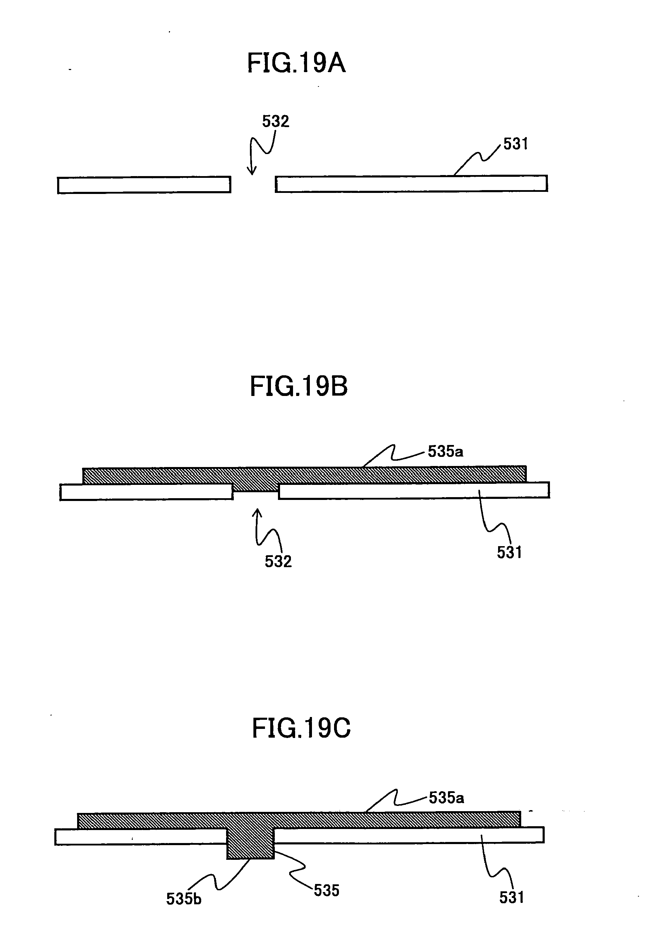

First, as shown in FIG. 19A, the contact hole 532 is formed in the second substrate 531. The formation method is the same as that of the first embodiment.

Next, as shown in FIG. 19B, the metallic film 535a is formed on the surface of the second substrate 531 on which the image displaying layer is formed. The formation method of the metallic film 535a is the same as that of the first embodiment.

Next, as shown in FIG. 19C, the metal plating is performed so that metal is deposited from the region of the contact hole 532 in which the metallic film 535a is exposed. The metallic layer 535b is formed so that the contact hole 532 is filled with the metal. The electrode 535 which includes the metal layer 535a and the metal layer 535b is formed.

The second substrate 531 in which the electrode 535 is formed is equivalent to the second substrate 31 of the first embodiment in which the electrode 35 is formed.

According to this embodiment, an electrode can be formed without performed etching, such as RIE, and an electrode can be formed in a short time with a low cost.

Next, the seventh embodiment of the invention will be described. This embodiment relates to the composition in which the capacitor used as a pixel capacitor is produced simultaneously with the producing of a semiconductor chip in the second embodiment, and the transistor and the pixel capacitor are bonded together by bonding the first substrate and the second substrate.

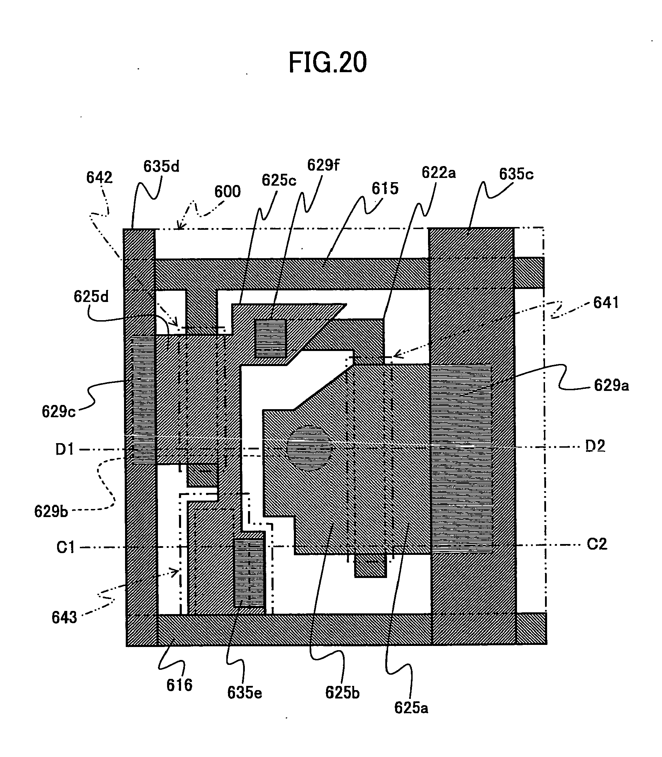

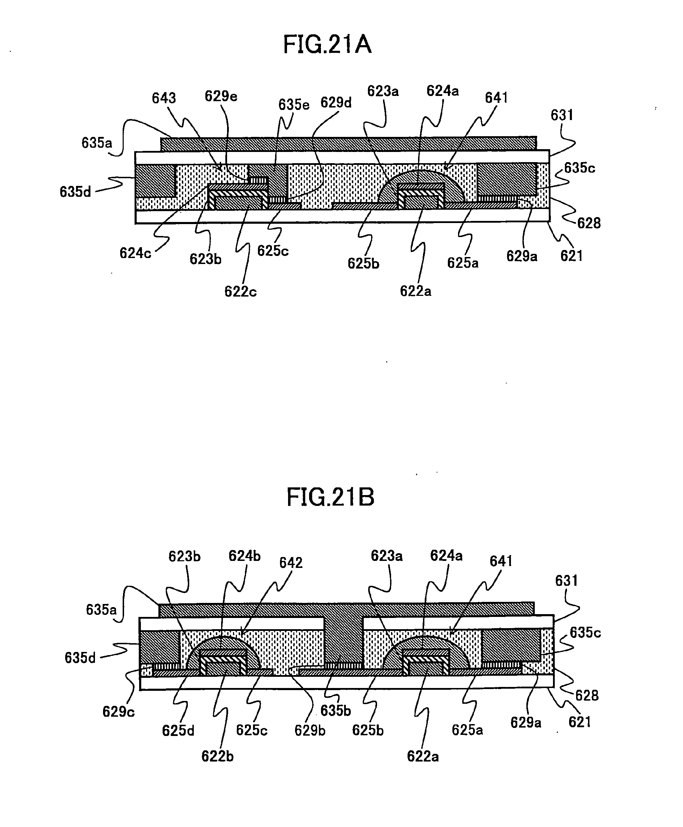

A description will be given of the seventh embodiment of the invention with reference to FIG. 20, FIG. 21A and FIG. 21B.

FIG. 20 shows the composition of the electrode wiring per one pixel 600 between the first substrate 621 and the second substrate 631 in the image display device of this embodiment. FIG. 21A is a cross-sectional view of the composition taken along the two-dot chain line C1-C2 in FIG. 20, and FIG. 21B is a cross-sectional view of the composition taken along the two-dot chain line D1-D2 in FIG. 20.

In this embodiment, the gate line 615 and the capacitor line 616 are formed in the first substrate 621, and the electrode 635a of the display element is formed in the second substrate 631.

By compressing the anisotropic conduction film 628 by pressure, conductivity is given to the region 629a in which the electrode 625a formed on the first substrate 621 and the electrode 635c formed on the second substrate 631 are bonded and electrically connected together, conductivity is given to the region 629c in which the electrode 625d formed on the first substrate 621 and the electrode 635d formed on the second substrate 631 are bonded and electrically connected together, and conductivity is given to the region 629b in which the electrode 625b formed on the first substrate 621 and the electrode 635b formed in the contact hole of the second substrate 631 are bonded and electrically connected together. Similarly, conductivity is given to the regions 629e and 629d in which the electrode 624c and the electrode 625c formed on the first substrate 621 are bonded and electrically connected to the electrode 635e, so that the capacitor used as the pixel capacitor 643 is formed. Thereby, the gate electrode 622a of the first transistor 641 is connected to both the second transistor 642 and the pixel capacitor 643 in the region 629f.

The capacitor used as the pixel capacitor 643 is constituted by: the electrode 622c simultaneously formed with the forming of the gate electrode 622a of the first transistor 641 and the gate electrode 622b of the second transistor 642; the insulating layer 623c simultaneously formed with the forming of the gate insulating layer 623a of the first transistor 641 and the gate insulating layer 623b of the second transistor 642; and the electrode 624c formed simultaneously with the forming of the electrodes 624a, 624b, and the electrodes 625a, 625b, 625c, 625d used as the source electrodes and the drain electrodes of the first transistor 641 and the second transistor 642.

For this reason, the special process for forming the pixel capacitor 643 is not needed, and the capacitor used as the pixel capacitor 643 is formed at the time of performing the process of forming the first transistor 641 and the second transistor 642. In this manner, the drive circuit per pixel which includes the first and second transistors 641 and 642 and the pixel capacitor 643 is formed. It is also possible to form the drive circuit per pixel which includes one transistor and one pixel capacitor according to this embodiment based on the composition that is the same as in the first embodiment. According to this embodiment, it is also possible to form the drive circuit per pixel which includes three or more transistors and one pixel capacitor.

According to this invention, the display device having the multilayer interconnection can be formed without forming any interlayer insulation film, and the productivity can be increased. The process of heating or UV irradiation is performed separately from the process of forming the semiconductor chip, and the display device can be manufactured without adversely affecting the semiconductor chip by the process of heating or UV irradiation. Thereby, it is possible to provide a display device which can be manufactured with good quality and low cost.

## Claims

1. A display device comprising:
a first substrate on which a semiconductor circuit is formed;
a second substrate disposed over the first substrate to include a first electrode formed on a first surface of the second substrate to perform image displaying, and a second electrode exposed to a second surface of the second substrate and bonded to the first electrode via a contact hole;
a third substrate disposed over the second substrate to include a third electrode formed to perform image displaying in association with the first electrode of the second substrate; and
an image displaying layer formed between the second substrate and the third substrate to perform image displaying,
wherein an electrode on a surface of the first substrate on which the semiconductor circuit is formed is electrically connected to the second electrode exposed to the second surface of the second substrate.

2. The display device according to claim 1,
wherein the electrode on the surface of the first substrate on which the semiconductor circuit is formed and the second electrode exposed to the second surface of the second substrate are electrically connected via an anisotropic conduction film which is disposed between the first substrate and the second substrate.

3. The display device according to claim 1,
wherein the second electrode exposed to the second surface of the second substrate is formed to project from the second surface of the second substrate.

4. The display device according to claim 1,
wherein the semiconductor circuit comprises a semiconductor chip, the semiconductor chip being constituted by a gate electrode formed on the first substrate, a gate insulating layer formed to cover the gate electrode, a source electrode and a drain electrode, both formed on the gate insulating layer, and a semiconductor layer formed to contact both the source electrode and the drain electrode,
wherein a capacitor is constituted by a lower electrode formed simultaneously with the forming of the gate electrode and not connected to the gate electrode, an insulating layer formed simultaneously with the forming of the gate insulating layer, and an upper electrode formed simultaneously with the forming of the source electrode and the drain electrode, and
wherein the upper electrode of the capacitor on the first substrate is electrically connected to the second electrode of the second substrate so that the capacitor forms a pixel capacitor electrically connected to the semiconductor chip.

5. The display device according to claim 4,
wherein two or more said semiconductor chips are arranged per pixel.

6. The display device according to claim 1,
wherein the image displaying layer forms any of a liquid crystal display element, an electrophoretic display element, an electrochromic display element, an electroluminescent display element, and an electrodeposition display element.

7. A display device comprising:
a first substrate on which a semiconductor circuit is formed;
a second substrate disposed over the first substrate to include a first electrode formed on a first surface of the second substrate to perform image displaying, a second electrode exposed to a second surface of the second substrate and bonded to the first electrode via a contact hole, and a connection electrode being flush with the second electrode in a different position on the second surface and formed to be connected to an electrode on the first substrate; and
an image displaying layer disposed on the first electrode of the second substrate to perform image displaying with the first electrode and an opposing electrode disposed on the image displaying layer,
wherein electrodes on a surface of the first substrate on which the semiconductor circuit is formed are electrically connected to the second electrode and the connection electrode on the second surface of the second substrate respectively.

8. The display device according to claim 2, further comprising a third substrate disposed over the second substrate to include a third electrode formed to perform image displaying in association with the first electrode of the second substrate,
wherein the image displaying layer is formed between the second substrate and the third substrate to perform image displaying.

9. The display device according to claim 7,
wherein the electrodes of the first substrate and the second electrode and the connection electrode of the second substrate are, respectively, electrically connected via anisotropic conduction films disposed between the first substrate and the second substrate.

10. The display device according to claim 7,
wherein the second electrode exposed to the second surface of the second substrate is formed to project from the second surface of the second substrate.

11. The display device according to claim 7,
wherein the semiconductor circuit comprises a semiconductor chip, the semiconductor chip being constituted by a gate electrode formed on the first substrate, a gate insulating layer formed to cover the gate electrode, a source electrode and a drain electrode, both formed on the gate insulating layer, and a semiconductor layer formed to contact both the source electrode and the drain electrode,
wherein a capacitor is constituted by a lower electrode formed simultaneously with the forming of the gate electrode and not connected to the gate electrode, an insulating layer formed simultaneously with the forming of the gate insulating layer, and an upper electrode formed simultaneously with the forming of the source electrode and the drain electrode, and
wherein the upper electrode of the capacitor on the first substrate is electrically connected to the second electrode of the second substrate so that the capacitor forms a pixel capacitor electrically connected to the semiconductor chip.

12. The display device according to claim 11,
wherein two or more said semiconductor chips are arranged per pixel.

13. The display device according to claim 7,
wherein the image displaying layer constitutes any of a liquid crystal display element, an electrophoretic display element, an electrochromic display element, an electroluminescent display element, and an electrodeposition display element.
